# FASCICULE DE BREVET EUROPEEN

(11) **EP 0 996 832 B1**
(45) Date de publication et mention de la délivrance du brevet: **06.08.2003**
(21) Numéro de dépôt: 99918022.7
(22) Date de dépôt: 05.05.1999
(51) Int. Cl.: F16F 15/131

(54) **DOUBLE VOLANT AMORTISSEUR DE TORSION, NOTAMMENT POUR VEHICULE AUTOMOBILE**
DOPPELSCHWUNGRAD-TORSIONSDÄMPFER,INSBESONDERE FÜR EIN KRAFTFAHRZEUG
DOUBLE TORQUE FLYWHEEL, IN PARTICULAR FOR MOTOR VEHICLE

(30) Priorité: 05.05.1998 FR 9805652; 28.07.1998 FR 9809638
(43) Date de publication de la demande: 03.05.2000
(73) Titulaire: VALEO EMBRAYAGES s.a.s., 80009 Amiens Cedex 1 (FR)
(72) Inventeur: BERTIN, Patrice, F-95540 Méry-sur-Oise (FR); FENIOUX, Daniel, F-93800 Epinay-sur-Seine (FR); GRIECO, Giovanni, F-92700 Colombes (FR)
(74) Mandataire: Lemaire, Marc
(86) Numéro de dépôt international: FR9901066
(87) Numéro de publication internationale: WO99057456

(56) Documents cités:
- EP-A- 0 798 490
- WO-A-91/10075
- DE-A- 19 645 174
- DE-A- 19 728 422
- FR-A- 2 660 037
- GB-A- 2 244 543
- US-A- 5 611 416

## Description

La présente invention se rapporte à un double volant amortisseur de torsion, notamment pour véhicule automobile, par exemple du type de ceux décrits dans les documents FR-A-2 736 116, EP-A-0 798 490 et FR-A- 2 660 037.

Dans ceux-ci, le double volant comporte deux masses coaxiales montées mobiles en rotation l'une par rapport à l'autre à l'encontre d'organes élastiques.

L'une des masses, dite première masse, est destinée à être fixée à un arbre menant, tel que le vilebrequin du moteur du véhicule, tandis que l'autre masse, dite seconde masse, est destinée à être reliée de manière débrayable à un arbre mené tel que l'arbre d'entrée de la boîte de vitesses. La première masse porte à rotation la deuxième masse à la faveur d'un moyeu portant des moyens de palier. Les moyens de palier interviennent entre le moyeu et la deuxième masse.

Le moyeu s'étend axialement en saillie en direction de la deuxième masse, qui est ainsi décalée axialement par rapport à la première masse.

Les organes élastiques sont implantés entre les deux masses et appartiennent à un amortisseur de torsion accouplant élastiquement la deuxième masse à la première masse.

Le moyeu s'étend centralement à la périphérie interne de la première masse.

Dans le document FR-A-2 736 116 les organes élastiques sont à action circonférentielle. Dans le document EP-A-0 798 490 les organes élastiques sont à action radiale.

Il existe donc plusieurs types de double volant amortisseur de torsion.

Il peut être souhaitable de pouvoir monter n'importe quel type de double volant amortisseur de torsion sur l'extrémité d'un arbre menant, tel qu'un vilebrequin.

La présente invention a pour objet de répondre à ce souhait de manière simple et économique.

Suivant l'invention ce problème est résolu par le fait que le moyeu est en deux parties coaxiales axialement alignées à savoir un premier moyeu supportant à rotation la seconde masse par l'intermédiaire des moyens de palier portés par ce premier moyeu et un second moyeu pour fixation à l'arbre menant, le second moyeu forme une entretoise axiale pour intervention entre l'arbre menant et le premier moyeu.

Grâce à l'invention le premier moyeu prolonge le second moyeu et on peut monter n'importe quel type de double volant amortisseur de torsion équipé du premier moyeu sur le second moyeu.

Ce second moyeu permet de raccourcir l'arbre menant et peut être en matière beaucoup plus économique que celle de l'arbre menant, tel qu'un vilebrequin, qui est forgé et usiné. Ce second moyeu pénètre à l'intérieur du carter du moteur à combustion interne.

La solution est donc simple et économique.

Avantageusement le second moyeu présente à sa périphérie externe successivement axialement une creusure, une première gorge et une deuxième gorge de taille supérieure à la première gorge.

La creusure, en liaison avec une paroi fixe, telle que la paroi du carter du moteur, permet de loger un joint d'étanchéité agissant entre cette paroi et le second moyeu. Ce joint dynamique est en contact tournant avec le second moyeu et empêche l'huile de sortir du moteur. La première gorge permet de récupérer les fuites d'huile venant du moteur. La deuxième gorge permet de recueillir, les particules et les fuites de liquide venant radialement de l'extérieur.

Le second moyeu de fixation est donc également un moyeu anti-pollution et un moyeu pour contact tournant avec le joint d'étanchéité solidaire de la paroi fixe.

En variante, le second moyeu porte le rotor d'une machine électrique . Cette machine électrique comporte également un stator monté de manière coaxiale par rapport au rotor. Le rotor et le stator sont montés radialement l'un au-dessus de l'autre.

Dans une forme de réalisation, le stator entoure le rotor. Le stator est porté par une pièce porteuse fixe avec intervention de seconds moyens de palier entre la pièce porteuse et le second moyeu.

Ainsi, le stator est positionné par rapport au rotor. L'entrefer entre le stator et le rotor est donc précis.

Le stator présente des enroulements. Ainsi, la machine électrique, du type moteur synchrone ou asynchrone, forme un démarreur ou un alternateur pour le véhicule automobile.

Cette machine permet de filtrer les vibrations en sorte que le double volant amortisseur de torsion peut être rudimentaire, les organes élastiques de ce volant effectuant des débattements angulaires moins importants. Grâce au second moyeu portant le rotor, on filtre bien les vibrations grâce à l'inertie obtenue.

La machine permet d'accélérer et de freiner le moteur à combustion interne du véhicule automobile.

La machine permet d'arrêter le moteur du véhicule au feu rouge et de redémarrer. Pour plus de précisions, on se reportera par exemple au document WO98/05882.

Bien entendu, le second moyeu peut porter le rotor de la machine et présenter une creusure et une première gorge car le rotor est, dans une forme de réalisation, porté par un second voile sinueux implanté au voisinage de l'extrémité libre du second moyeu, c'est-à-dire éloigné de l'arbre menant. Le second moyeu peut donc présenter axialement la creusure, la première gorge, les seconds moyens de palier, tel qu'un roulement à billes, et le second voile sinueux.

Grâce à l'invention le double volant peut être doté d'un flasque transversal de support du type métallique associé au premier moyeu et on supprime les bouchons prévus dans le document FR-A-2 736 116 en regard des pions solidaires de la deuxième masse et servant à entraîner en rotation une rondelle de frottement portée par la première masse et appartenant à des moyens de frottement à action axiale.

En effet, dans une forme de réalisation, le second moyeu présente à son extrémité libre une paroi s'étendant en regard des trous précités pour boucher ceux-ci.

La paroi, par sa face tournée vers la paroi fixe, constitue avantageusement le flanc latéral de la seconde gorge. La face de friction du plateau de réaction, que comporte la seconde masse, est ainsi bien protégée par le second moyeu. Il en est de même des moyens de frottement à action axiale et de ce qui se trouve à l'intérieur de la première masse. En variante la face de l'extrémité libre du second moyeu bouche les-dits trous.

Bien entendu, la présence des trous précités n'est pas obligatoire. En effet, le double volant peut être doté de pièces en tôle assemblées entre elles par rivetage.

Avantageusement le flasque de support est solidaire du premier moyeu pour formation d'un sous-ensemble formant le double volant amortisseur de torsion et le second moyeu sert d'appui au flasque. En variante, le premier moyeu présente un voile pour appui du flasque de support.

Le premier moyeu dans une forme de réalisation présente un épaulement transversal pour l'appui du flasque de support.

C'est ce sous-ensemble, formant un module, que l'on rapporte sur le second moyeu avec formation d'un canal annulaire ouvert vers l'extérieur entre la paroi fixe et le flasque de support s'étendant parallèlement à la paroi fixe. Ce canal a un fond formé par le second moyeu. Une même série d'organes de fixation peut fixer les deux moyeux à l'arbre menant. Avantageusement deux séries d'organes de fixation sont prévues.

Les deux séries d'organes de fixation alternent circonférentiellement l'une avec l'autre. En variante, elles sont implantées sur des circonférences de diamètre différent.

La première série d'organes de fixation sert à fixer le sous-ensemble précité au second moyeu, tandis que la deuxième série d'organes de fixation sert à fixer le second moyeu en bout de l'arbre menant.

Les organes de fixation, -tels que des vis, sont ainsi plus courts. En outre, pour effectuer des réparations, on peut démonter le double volant en laissant en place le second moyeu. Dans une forme de réalisation, la première série d'organes de fixation est plus courte axialement que la deuxième série d'organes de fixation. Ces série d'organes de fixation peuvent avoir des diamètres différents.

Avantageusement un disque de support entoure l'extrémité libre du second moyeu et augmente ainsi l'inertie de la première masse. Ce disque est fixé à sa périphérie interne au flasque par des premiers moyens de fixation, tels qu'une série interne de rivets.

Avantageusement des seconds moyens de fixation interviennent entre les périphéries externes du disque de support et du flasque de support.

Ainsi le flasque de support est moins sensible aux vibrations axiales engendrées à certain régime moteur par l'arbre menant.

Le disque de support porte la couronne de démarreur et ce radialement au-dessus d'un rebord annulaire d'orientation axiale que présente le flasque de support à sa périphérie externe.

Le disque de support peut porter également à sa périphérie externe une cible d'allumage comme décrit par exemple dans le document FR-A-2 526 106.

En variante, une plaque est fixée sur le flasque pour permettre de monter dans son épaisseur des moyens de frottement. Dans une forme de réalisation, le disque de support s'étend radialement au-dessus du plateau de réaction et a une forme tortueuse. La plaque précitée est interposée entre le flasque et le disque support.

Le plateau de réaction de la deuxième masse présente avantageusement à sa périphérie externe un rebord annulaire d'orientation axiale dirigé vers la couronne de démarreur et la première masse.

Le rebord s'étend radialement au-dessus du flasque de support.

Ainsi le plateau de réaction présente dorsalement une face plane de friction pour un disque de friction. Cette face de friction est prolongée radialement vers l'extérieur par le rebord du plateau de réaction doté de trous taraudés pour fixation d'un couvercle d'embrayage en forme d'assiette creuse du type standard.

Bien entendu on peut doter le plateau de réaction d'ailettes de ventilation au voisinage de son rebord au-dessus du flasque de support.

En variante, le plateau de réaction présente à sa périphérie externe une jupe d'orientation axiale entourant les garnitures de friction d'un disque de friction, que comporte l'embrayage auquel appartient le plateau de réaction.

Ainsi, les poussières provenant de l'abrasion des garnitures de friction ne risquent pas de polluer le rotor et/ou le stator de la machine électrique portée par le second moyeu.

En variante le disque de support peut être prolongé axialement en direction du plateau de réaction et ce au-dessus du flasque de support comme décrit dans le document FR-A-2 526 106.

Ce prolongement présente alors à son extrémité libre des ailettes de ventilation.

Dans tous les cas la ventilation est efficace car les ailettes sont implantées sur un grand diamètre. Bien entendu la deuxième masse présente des trous d'aération radialement en dessous de la face de friction de son plateau de réaction.

Ce plateau de réaction, du fait de la présence de son rebord, peut être creusé au niveau de sa face tournée vers la première masse pour réaliser un dégagement pour le rebord du flasque de support.

Grâce à l'invention l'un des éléments premier moyeu - second moyeu peut porter intérieurement un palier pilote pour supporter l'extrémité de l'arbre mené.

De préférence c'est le premier moyeu qui porte palier pilote en sorte qu'il est possible de démonter le double volant aisément en laissant le second moyeu fixé sur l'arbre menant.

Le premier moyeu intérieurement sert avantageusement de logement au moyeu du disque de friction de l'embrayage à friction auquel appartient le plateau de réaction.

Des moyens de centrage sont prévus entre le premier et le second moyeu.

Grâce à toutes ces dispositions le premier moyeu peut consister en un simple tube métallique très économique et de faible épaisseur.

Sur ce tube on vient rapporter par exemple par soudage le flasque de support. En variante, la fixation est réalisée par sertissage. Le palier pilote est porté intérieurement par le premier moyeu via une bague d'auto-ajustage comportant au moins une fente. Cette bague évite les opérations de reprise et permet de faire appel à un moyeu tubulaire de faible épaisseur.

On appréciera, grâce à l'invention, que le double volant peut comporter un maximum de pièces métalliques de préférence en tôle emboutie.

Ce double volant comporte au moins trois pièces à savoir le disque de support de la couronne de démarreur, qui peut être d'un seul tenant avec ce disque, le flasque de support et une rondelle de guidage ou une rondelle de fermeture solidaire de l'extrémité du rebord du flasque de support.

Le disque de support peut être standard quel que soit le type de double volant.

La rondelle de guidage ou la rondelle de fermeture ont un grand diamètre intérieur. Le flasque de support est centré par le premier moyeu en étant fixé sur le premier moyeu.

Grâce à l'invention le disque de support peut être très proche du carter du moteur et notamment de vis de fixation, dont les têtes s'étendent en saillie axiale.

En variante, le disque de support forme une rondelle de fermeture et des masses sont emprisonnées entre le flasque de support et le disque de support.

Le vilebrequin, ou d'une manière générale l'arbre menant, n'a pas besoin d'être creusé pour réception de l'extrémité de l'arbre mené. En outre les moyeux ont une forme simple. Ces moyeux sont de forme cylindrique.

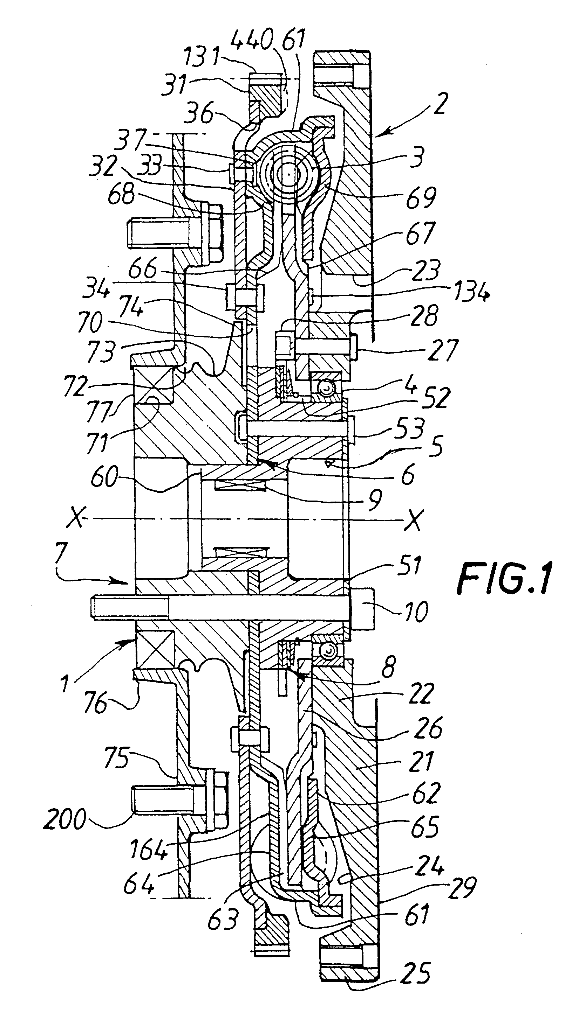

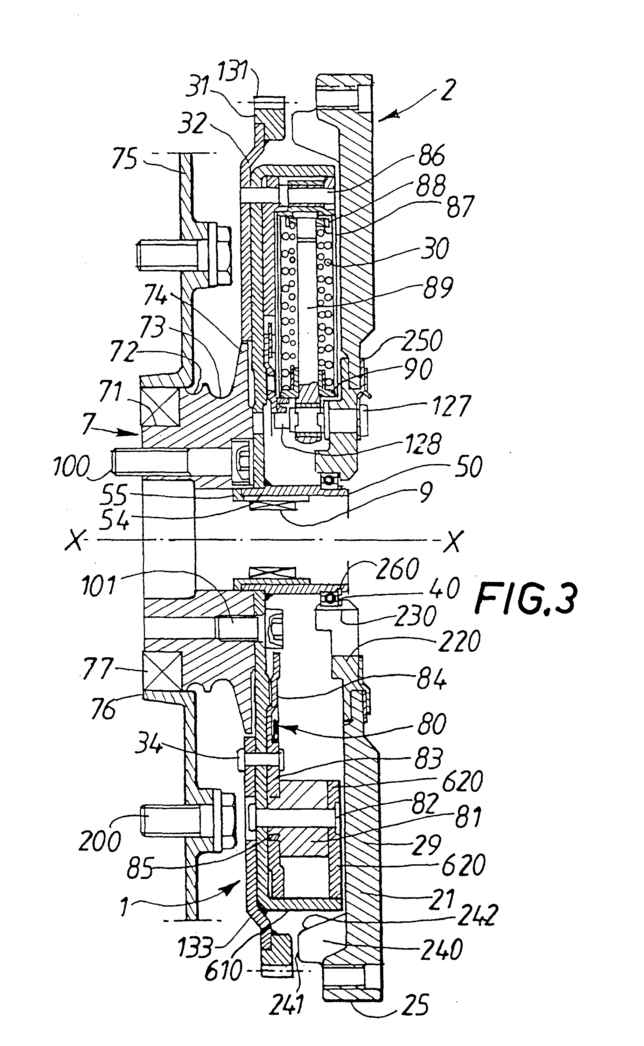

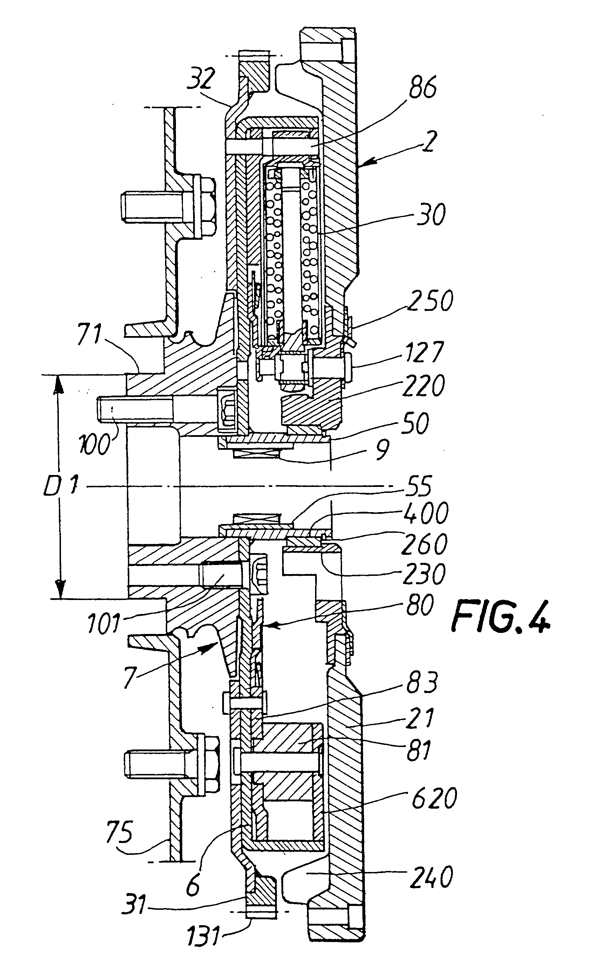

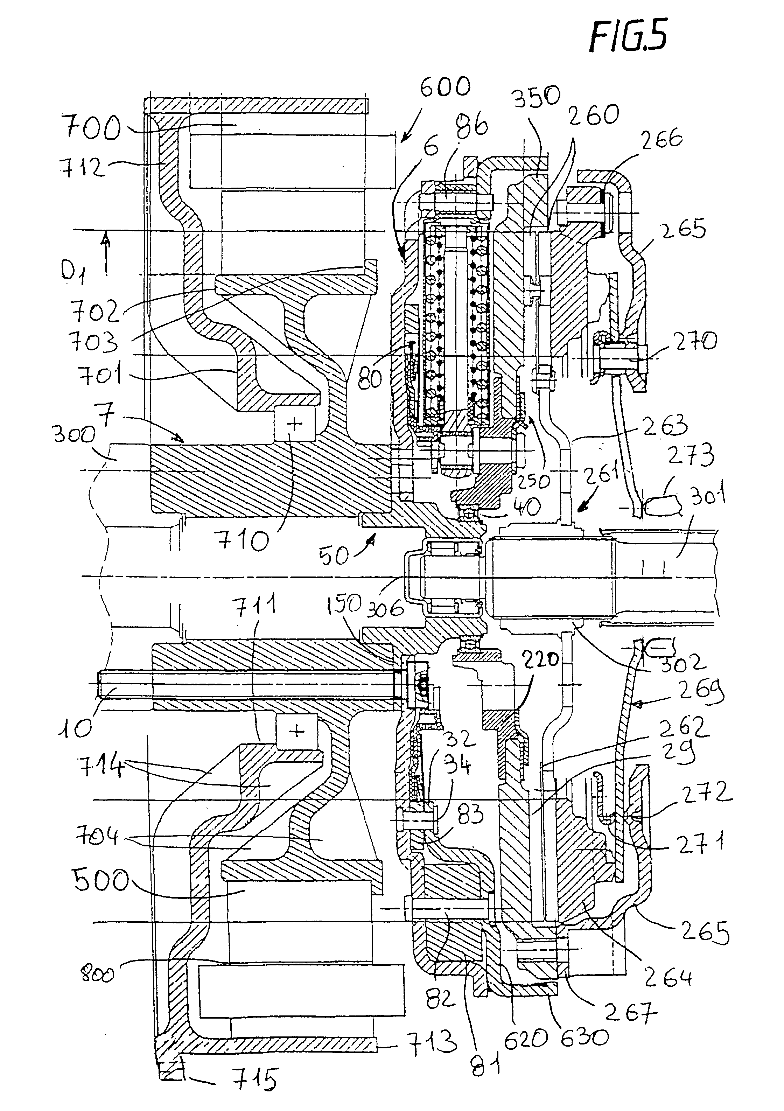

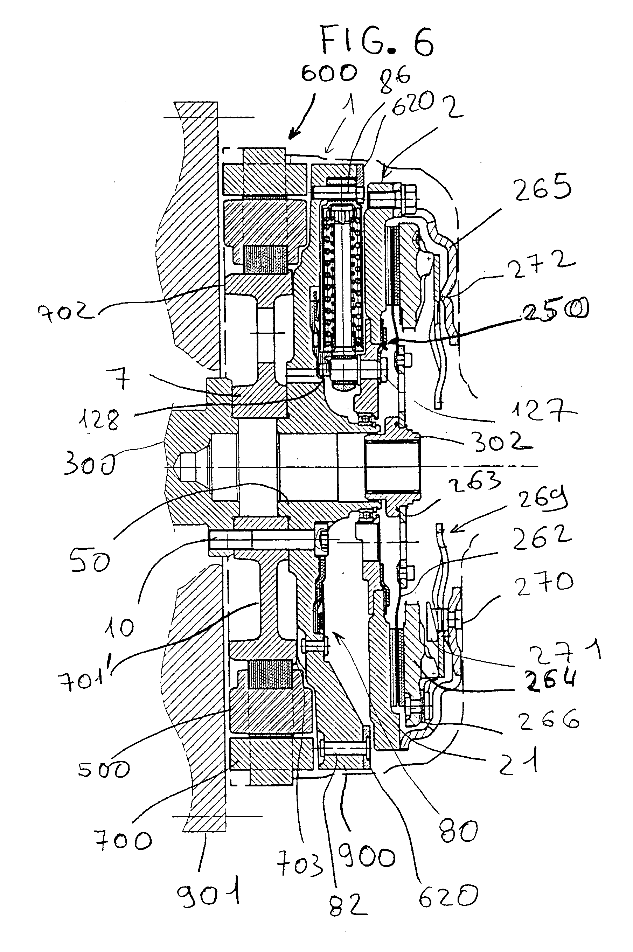

La description qui va suivre illustre l'invention en regard des figures 1 à 3 annexées représentant en coupe axiale trois modes de réalisation d'un double volant amortisseur de torsion selon l'invention, tandis que la figure 4 est une vue analogue à la figure 3 avec des moyens de palier en forme de palier lisse, et les figures 5 et 6 sont des vues analogues à la figure 3 avec présence d'une machine électrique.

Dans les figures, les éléments communs seront affectés des mêmes signes de référence.

Dans ces figures, est représenté un double volant amortisseur de torsion, qui intervient entre le moteur à combustion interne et la transmission du véhicule automobile pour notamment filtrer les vibrations et constituer un organe de coupure et de démarrage.

Ce volant présente deux masses coaxiales 1, 2 montées rotatives, lorsqu'elles sont entraînées par le moteur du véhicule, autour d'un axe de rotation X-X, constituant l'axe de symétrie axiale du double volant. La deuxième masse 2 est portée à rotation par la première masse 1 destinée à être liée en rotation à un arbre menant, ici le vilebrequin du véhicule automobile, tandis que la deuxième masse 2 est destinée à être liée en rotation de manière débrayable à un arbre mené, ici l'arbre d'entrée de la boîte de vitesses du véhicule.

La première masse 1 présente centralement, à sa périphérie interne, un premier moyeu 5 (figures 1 et 2), 50 (figura 3).

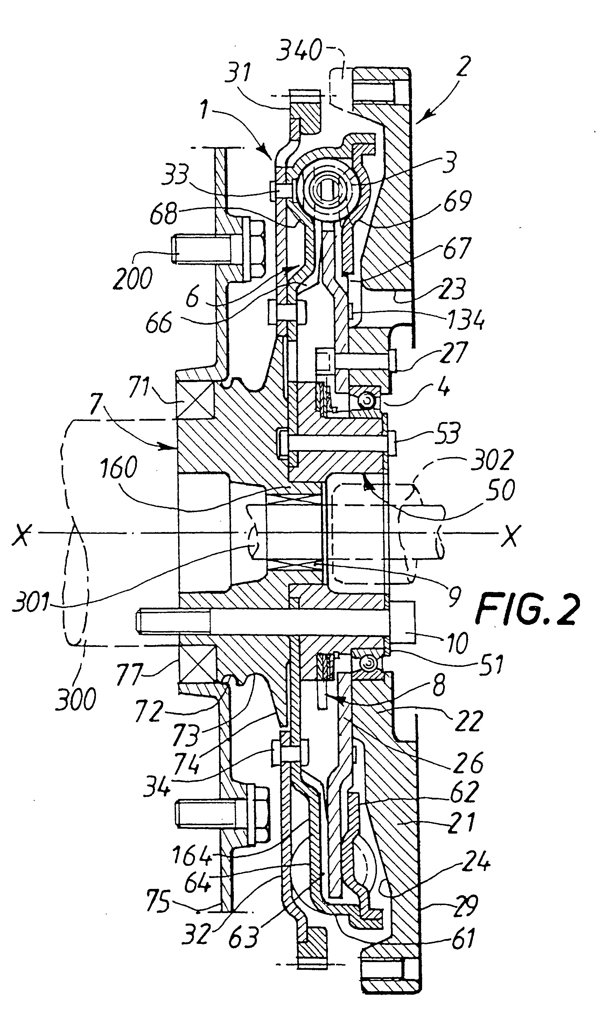

Ce premier moyeu 5, 50 porte des moyens de palier 4 (figure 1 et 2), 40 (figure 3) pour montage rotatif de la deuxième masse 2 sur la première masse 1.

Le premier moyeu 5, 50 s'étend axialement en saillie en direction de la deuxième masse 2. Le premier moyeu 5, 50 a une forme cylindrique.

Dans les figures 1 et 2, le premier moyeu 5 est massif, tandis qu'à la figure 3, le premier moyeu 50 est léger et consiste en un tube métallique de faible épaisseur et donc de forme économique et simple.

Les moyens de paliers interviennent ici entre la périphérie externe du premier moyeu 5, 50 et la périphérie interne de la seconde masse 2 trouée centralement à cet effet.

Ainsi, le premier moyeu 5, 50 pénètre par son extrémité libre à l'intérieur du trou central de la seconde masse 2, qui est donc décalée axialement par rapport à la première masse 1.

Les moyens de palier 4, 40 peuvent consister en des paliers lisses en matière à faible coefficient de frottement, telle que la matière synthétique renforcée par des fibres, par exemple de verre, de carbone, etc. Un tel palier lisse est référencé en 400 à la figure 4.

En variante, comme par exemple décrit dans le document FR-A-2 706 006, on peut faire appel à un revêtement de carbone diamant amorphe. En variante le revêtement est un revêtement quasi-cristallin. Ici, les moyens de palier 4, 40 consistent en des roulements à billes.

Ces roulements peuvent être à deux rangées de billes. Dans les figures, les moyens de palier consistent en des roulements à une seule rangée de billes. Dans les figures 1 et 2, le roulement à billes 4 est radialement de taille supérieure au roulement à billes 40 de la figure 3.

Dans toutes les figures, le premier moyeu 5, 50 est, à sa périphérie externe, étagé en diamètre pour formation d'un épaulement permettant de caler axialement dans un sens la bague interne du roulement à billes 4, 40 emmanchée sur l'extrémité libre de plus petit diamètre du premier moyeu 5, 50. Dans l'autre sens axial, la bague interne du roulement 4, 40 est calée axialement respectivement par une rondelle d'appui 51 (figures 1 et 2) et par un circlips 260 (figure 3) monté dans une gorge réalisée à l'extrémité libre du premier moyeu 50.

La deuxième masse 2 présente à sa périphérie interne un moyeu interne 22 (figures 1 et 2), 220 (figure 3) épaulé intérieurement au-dessus de la rondelle d'appui 51 ou de circlips 260 pour montage dans son alésage interne de la bague extérieure du roulement à billes 4, 40 et calage axial de celle-ci dans un sens.

Le moyeu interne 22, 220 délimite donc le trou central de la deuxième masse 2, qui comporte un plateau 21 formant le plateau de réaction d'un embrayage à friction. Ce plateau 21 est en matière moulable ici en fonte. Dans les figures 1 et 2, le plateau de réaction 21 est d'un seul tenant avec le moyeu interne 22, tandis qu'à la figure 3, le moyeu interne 220 est distinct du plateau 21 ; un limiteur de couple 250 du type à friction intervenant entre la périphérie interne du plateau 21 et la périphérie externe du moyeu interne 220 comme décrit par exemple dans le document EP-A-0 798 490.

Ainsi, à l'arrêt et au démarrage du moteur du véhicule, on passe par la fréquence de résonance sans que le double volant ne soit endommagé grâce au limiteur de couple autorisant alors un glissement relatif du plateau 21 par rapport au moyeu interne 220 portant à rotation le plateau 21.

Dans ce cas, le moyeu interne 220 est en acier traité et, dans une variante non représentée, forme la bague extérieure du roulement à billes comme par exemple dans le document EP-A-0798 490.

Bien entendu, à la figure 3, la deuxième masse 2 peut être monobloc comme dans les figures 1 et 2. La deuxième masse 2 des figures 1 et 2 peut être en deux parties comme celle de la figure 3.

Toutes les combinaisons sont possibles.

Bien entendu, le roulement à billes 4, 40 peut être rapporté par soudage, par exemple par soudage sous pression à l'aide d'une décharge de condensateur, sur le premier moyeu 5, 50 et/ou sur le moyeu interne 22, 220.

Dans toutes les figures, les deux masses 1, 2 sont montées mobiles en rotation l'une par rapport à l'autre à l'encontre d'organes élastiques 3 (figures 1 et 2), 30 (figure 3) et de moyens de frottement 8 (figures 1 et 2), 80 (figure 3) à action axiale.

Dans les figures 1 et 2, les organes élastiques 3 interviennent circonférentiellement entre les deux masses 1 et 2, comme décrit par exemple dans le document FR-A-2 736 116. A la figure 3, les organes élastiques 30 interviennent radialement entre les deux masses comme décrit par exemple dans les documents FR-A-97/12115 déposé le 30/09/1997 ou EP-A-0 798 490.

Pour plus de précisions, on se reportera à ces trois documents, sachant qu'à la figure 3, les organes élastiques 30 travaillent en compression et peuvent naturellement être remplacés par des ressorts de traction. Ici, les organes élastiques 3, 30 sont des ressorts à boudin.

Ainsi qu'on le sait, la première masse 1 est destinée à être fixée sur le vilebrequin du moteur du véhicule. Cette première masse 1 est reliée de manière élastique à la seconde masse par les organes élastiques 3, 30, qui, en variante, peuvent consister en des blocs en matière élastique telle que de l'élastomère. Un amortisseur de torsion à organes élastiques 3, 30 intervient donc entre les deux masses 1, 2. L'amortisseur de torsion est donc implanté axialement entre les deux masses. Les moyens de frottement à action axiale 8, 80 appartiennent à cet amortisseur de torsion et comportent une rondelle de frottement entraînée, éventuellement après rattrapage d'un jeu, par la deuxième masse 2 et frottant contre deux surfaces de la première masse 1. La rondelle de frottement est portée par la première masse.

La deuxième masse 2, grâce à son plateau de réaction 21, est reliée en rotation de manière débrayable à l'arbre d'entrée de la boîte de vitesses. Ainsi qu'on le sait, le plateau de réaction 21 présente une face de friction 29 pour un disque de friction visible par exemple dans les documents FR-A-2 706 006, EP-A-0 798 490 et FR-97/12115 précités et à la figure 5.

La deuxième masse 2 est donc reliée de manière débrayable à l'arbre d'entrée de la boîte de vitesses par le disque de friction présentant à sa périphérie interne un moyeu central cannelé intérieurement pour sa liaison en rotation à l'arbre d'entrée de la boîte de vitesses.

Le plateau de réaction 21 appartient à l'embrayage à friction et présente à sa périphérie externe un rebord annulaire d'orientation axiale 25 doté de trous taraudés non référencés. Ces trous servent à la fixation d'un couvercle de forme creuse.

Le disque de friction présente à sa périphérie externe des garnitures de friction destinées à être serrées entre la face de friction 29 du plateau de réaction 21 et la face de friction en vis à vis d'un plateau de pression sous l'action de moyens élastiques embrayeurs, tel qu'un diaphragme, prenant appui sur le couvercle pour action sur le plateau de pression. Les moyens embrayeurs sont associés à des moyens débrayeurs en forme de leviers de débrayage, par exemple les doigts d'un diaphragme. En agissant, par exemple à l'aide d'une butée de débrayage, soit en tirant, soit en poussant, suivant le type de l'embrayage, on annule progressivement la charge qu'exercent les moyens embrayeurs sur le plateau de pression afin de libérer les garnitures de friction du disque de friction.

Pour plus de précisions, on se reportera par exemple à la figure 2 de document FR-97/12115 et au document FR-A-2 166 604.

Ainsi, normalement, l'embrayage à friction est engagé et le couple est transmis au vilebrequin du moteur du véhicule à l'arbre d'entrée de la boîte de vitesses. En agissant centralement à l'aide de la butée de débrayage sur les leviers de débrayage on désengage l'embrayage à friction. Le couple du moteur n'est alors plus transmis à l'arbre d'entrée de la boîte de vitesses qui pénètre à l'intérieur du premier moyeu 5, 50.

Un palier pilote 9, ici sous forme de roulement, est prévu pour supporter l'extrémité libre de l'arbre d'entrée de la boîte de vitesses, supporté également par un roulement porté par le carter de la boîte de vitesses.

Ici, le moyeu du disque de friction pénètre à l'intérieur du premier moyeu 5, 50 comme visible par exemple dans la figure 2 du document FR-97/12115 précité.

Suivant une caractéristique de l'invention, le premier moyeu 5, 50 est destiné à être solidarisé à un second moyeu 7, lui-même destiné à être fixé sur le vilebrequin du moteur du véhicule, ou d'une manière générale sur un autre arbre menant, à l'aide d'orgenes de fixation 10 (figures 1 et 2), 100 (figure 3).

Le premier moyeu 5, 50 prolonge axialement le deuxième moyeu 7. Ces moyeux 5, 50-7, ont le même axe de symétrie axiale à savoir l'axe X-X. Ils ont ici une forme cylindrique et sont d'orientation axiale.

Ainsi, suivant l'invention, le moyeu central de la première masse est en deux parties coaxiales cylindriques de forme simple dans le prolongement axial l'une de l'autre. Ces parties, ici de forme cylindrique, sont centrées l'une par rapport à l'autre et sont axialement alignées.

C'est donc par l'intermédiaire du second moyeu 7, formant moyeu de fixation, que le premier moyeu 5, 50, formant moyeu de support de la deuxième masse 2, se fixe sur le vilebrequin du moteur du véhicule, ou d'une manière générale, sur un arbre menant. Il est donc possible de former un ensemble unitaire sous la forme d'un double volant amortisseur de torsion, comprenant le double volant avec uniquement le premier moyeu 5, 50 puis de rapporter cet ensemble unitaire, formant un module, sur le second moyeu 7 de manière décrite ci après.

Ainsi, du fait que le premier et le second moyeu sont alignés axialement, l'alésage central du premier moyeu 5, 50 prolonge axialement l'alésage central du second moyeu 7.

Le vilebrequin du moteur du véhicule est plus court axialement. Le premier moyeu 5, 50 constitue le moyeu d'un double volant amortisseur de torsion classique. Le second moyeu 7 est une pièce intermédiaire formant entretoise entre le vilebrequin et le premier moyeu 5, 50. Cette entretoise permet la fixation du premier moyeu 5, 50 au vilebrequin et porte donc le premier moyeu 5, 50, lui-même portant la deuxième masse 2.

Des moyens de centrage, décrits ci-après interviennent entre le premier moyeu 5, 50 et le second moyeu 7 pour centrer les moyeux 5, 50-7 l'un par rapport à l'autre afin que ceux-ci aient le même axe de symétrie axiale X-X.

Dans les figures 1 et 3, le roulement pilote 9 est porté intérieurement par le premier moyeu 5, 50, tandis qu'à la figure 2, le roulement pilote 9 est porté intérieurement par le second moyeu 7.

Suivant une caractéristique, un flasque de support 6 est intercalé axialement entre le premier moyeu 5, 50 et le second moyeu 7. Les organes élastiques 3, 30 agissent entre le flasque 6 et la deuxième masse 2. Ce flasque 6, d'orientation transversale, est renforcée par un disque de support 32 portant une couronne de démarreur 31. Le flasque 6 prend appui sur la face de l'extrémité libre du second moyeu 7, qui positionne ainsi le flasque 6.

Le flasque 6 et le disque 32 sont métalliques en étant ici en tôle emboutie et s'étendent parallèlement au plateau de réaction 21.

Les moyens de centrage comportent un manchon annulaire de centrage délimité extérieurement par un épaulement de butée.

Le manchon est issu de l'un des éléments, premier moyeu 5, 50-second moyeu 7 et coopèrent avec la périphérie interne de l'autre des éléments second moyeu 7-premier moyeu 5, 50 dit ci après second élément.

Plus précisément, la périphérie externe du manchon est en contact intime avec la périphérie interne du second élément formée par l'alésage interne du second élément. Le manchon pénètre à l'intérieur du second élément et porte intérieurement le roulement pilote 9, qui, en variante, peut être remplacé par un palier lisse à faible coefficient de frottement ou par un revêtement du type carbone diamant amorphe.

Ainsi, le manchon porte, dans tous les cas, un palier pilote 9 pour l'extrémité libre de l'arbre d'entrée de la boite de vitesses ou, d'une manière générale pour l'extrémité libre d'un arbre mené.

Suivant une caractéristique, le second moyeu 7 présente successivement, en allant axialement du vilebrequin au premier moyeu 5, 50 aligné axialement avec le second moyeu 7, une creusure 71, une première gorge 72, une deuxième gorge 73 et une paroi 74 saillante radialement vers l'extérieur en direction opposée à l'axe X-X. Les deux gorges 72 et 73 sont réalisées à la périphérie externe du second moyeu 7 et ont un fond arrondi raccordé à deux flancs latéraux inclinés. Les gorges 72 et 73 ont donc une forme évasée radialement vers l'extérieur. La première gorge 72 est adjacente à la creusure 71 ici de forme annulaire, tandis que la deuxième gorge 73 a l'un de ses flancs latéraux qui forme l'une des faces de la paroi 74.

On voit en 75 la paroi fixe du carter du moteur du véhicule. La paroi 75 présente un trou central délimité par une douille 76 d'orientation axiale, dirigée axialement en direction opposée au premier moyeu 5, 50.

La douille 76 est d'un seul tenant avec la paroi fixe 75 et s'étend en regard de la creusure 71.

La douille 76 entoure la creusure en sorte qu'il est formé une cavité annulaire à la faveur de la creusure 71 et de la douille 76. Dans cette cavité vient se loger un joint d'étanchéité 77 en contact élastique avec le second moyeu 7 et immobilisée axialement et en rotation par la douille 76. Il est formé ainsi un joint 77, appelé joint tournant, empêchant l'huile du moteur de s'échapper. L'extrémité de l'arbre menant, ici le vilebrequin, est donc simplifiée du fait que le joint d'étanchéité 77 n'est pas en contact avec le vilebrequin, qui, ainsi, est plus court axialement. Le second moyeu 7 est ici métallique en étant en une matière moins coûteuse que celle du vilebrequin dont l'extrémité libre est dotée par exemple d'une denture pour une courroie de transmission de mouvement. Le second moyeu pénètre partiellement à l'intérieur du carter du moteur à combustion interne.

Bien entendu, le second moyeu 7, en variante est en matière frittée. Dans une autre variante, le second moyeu 7 est en matière moulable.

La solution, selon l'invention est donc économique. La première gorge 72 sert à la déflexion et à la récupération des fuites d'huile venant du moteur. L'autre gorge 73 est adjacente au flasque de support 6, ici en tôle emboutie. Un canal est ainsi formé entre la paroi 75 du moteur et le flasque du support 6, parallèle à la paroi 75. La paroi 74 est adjacente au flasque 6 doté de trous 70, décrits ci-après.

La paroi 74 forme un bouchon pour les trous 70, du fait qu'elle s'étend à sa périphérie externe en regard de ceux-ci.

La deuxième gorge 73 est une gorge d'écoulement pour l'huile, ou autre liquide, et pour les particules venant de l'extérieur.

Le second moyeu 7 évite ainsi que l'huile venant du moteur ou tout autre particule, ne viennent souiller ou polluer la face de friction 29 du plateau de réaction 21, ainsi que les moyens de frottement 8, 80 à action axiale, ou d'une manière générale tout ce qui est situé entre le flasque 6 et le plateau de réaction 21.

Le moyeu 7 est donc également un moyeu de protection contre toute pollution, un moyeu d'obturation des trous 70, un moyeu de contact pour le joint d'étanchéité 77, et un moyeu de butée pour le flasque 6.

Le disque de support 32 est centralement troué et entoure la paroi 74 de forme annulaire.

Ce disque 32 prolonge donc radialement la paroi 74 et s'étend radialement au-dessus des trous 70.

Ainsi qu'on l'aura compris, le disque de support 32 double en épaisseur le flasque 6 et ce, radialement au-dessus de la paroi 74, globalement de même épaisseur à sa périphérie externe que celle du disque de support 32, ici d'épaisseur constante. L'inertie de la première masse 1 est donc augmentée de manière simple et économique, d'autant plus que la couronne de démarreur 31, présentant une denture 131 destinée à coopérer avec le démarreur du véhicule lors du démarrage du moteur du véhicule, est implantée à la périphérie externe du disque 32. Le canal précité est donc délimité par la paroi 75, par le disque 32 et la paroi 74. Ce canal annulaire est borgne ; le fond de ce canal étant formé par les deux gorges 72 et 73, du second moyeu. La paroi 75 est parallèle au disque 32 et au flasque de support 6.

On notera que la deuxième gorge 73 est plus profonde que la première gorge 72. Cette deuxième gorge 73 est également plus large que la première gorge 72 en sorte que la deuxième gorge 73 a une taille supérieure à la première gorge 72 de récupération des fuites d'huile. En variante, le second moyeu 7 présente une surépaisseur dans laquelle est formée la première gorge 72 s'étendant ainsi radialement au dessus de la deuxième gorge 73, et la paroi 74 est plus courte et s'étend radialement en dessous des trous 70 en regard de la périphérie interne du flasque 6 décalé axialement en direction du plateau de réaction. La périphérie interne du flasque 6 se raccorde à la partie principale du flasque par une zone inclinée ou arrondie formant déflecteur et s'étendant au-dessus de la paroi 74. Ainsi, les trous 70 sont protégés.

La creusure 71 et les gorges 72, 73 sont obtenues par usinage, frittage ou moulage suivant la constitution du second moyeu 7 formant entretoise.

Le flasque de support 6 comporte un rebord annulaire 61 (figures 1 et 2), 610 (figure 3) d'orientation axiale à sa périphérie externe. La couronne de démarreur 31 s'étend radialement au-dessus de ce rebord à l'extrémité libre duquel est fixée, au voisinage du plateau de réaction 21, une rondelle de guidage 62 (figures 1 et 2), ou une rondelle de fermeture 620 (figure 3).

Plus précisément, le disque de support 32 présente à sa périphérie externe un tronçon périphérique (non référencé) décalé axialement en direction du plateau de réaction 21 par rapport à la partie principale de ce disque 32 s'étendant transversalement, c'est-à-dire perpendiculairement à l'axe X-X.

Ce tronçon périphérique d'orientation transversale s'étend radialement au-dessus du rebord 61, 610 et est relié à la partie principale par un tronçon courbe (non référencé) doté de trous 36 (figure 1) pour obtenir une position parfaite de la couronne de démarreur 31, fixée par soudage sur le tronçon périphérique du disque de support 32.

Ainsi, les dents de la couronne 31 sont parallèles à l'axe X-X. Cette couronne 31 est creusée à sa périphérie interne au niveau de sa face tournée à l'opposée du plateau de réaction 21. Le disque 32, par son tronçon périphérique pénètre dans cette creusure. Le soudage est réalisé entre la périphérie interne de la couronne 31 et la face du disque 32 tournée vers le plateau de réaction 21, et ce juste au-dessus des trous 36, qui garantissent ainsi une bonne planéité. Le rebord périphérique externe 25 du plateau de réaction 21 s'étend radialement au-dessus du rebord annulaire 61, 610 du flasque 6 et est dirigé axialement vers la couronne 31.

Le rebord 25 du plateau 21 peut s'étendre globalement sur la même circonférence moyenne que celle de la couronne 31. Ici, le rebord 25 s'étend radialement légèrement au-dessus de la couronne 31, qui a globalement la même hauteur que le rebord 25. Le rebord 25 rigidifie le plateau de réaction 21 et permet d'augmenter l'inertie de la deuxième masse 2 sans augmenter l'encombrement axial de l'ensemble double volant-amortisseur embrayage à friction. Ainsi, on peut fixer un couvercle d'embrayage standard sur le plateau de réaction, c'est-à-dire un couvercle plus profond que celui de la figure 2 du document FR97/12115, tout en ayant un plateau de réaction 21 avec une face dorsale plane comprenant la face de friction 29 prolongée à sa périphérie externe. Ce plateau est rigidifié par le rebord 25.

Bien entendu, le disque de support 32 peut présenter à sa périphérie externe une zone d'orientation axiale avec deux tronçons distincts décalés radialement l'un par rapport à l'autre comme décrit par exemple dans le document FR-A-2 526 106. Dans ce cas, l'un des tronçons axiaux ,porte la couronne de démarreur 31, tandis que l'autre tronçon axial porte une cible d'allumage, dans ce cas, la plus proche du plateau de réaction 21. La cible d'allumage fait partie intégrante de la zone axiale, qui se raccorde à la partie principale d'orientation transversale du disque 32 par une zone de raccordement inclinée. La zone axiale en variante peut porter à son extrémité libre des ailettes de ventilation.

Tout ceci est rendu possible par la présence d'un espace axial entre le rebord 25 et la couronne 31 (figures 1 et 2).

Bien entendu, on peut profiter de cet espace pour implanter des ailettes de ventilation 240 comme visible à la figure 3. Les ailettes 240 s'étendent radialement au-dessus du rebord 610 du flasque et sont venues de moulage avec le plateau de réaction 21. Ces ailettes 240 sont réparties circonférentiellement de manière régulière.

Les ailettes 240 sont dirigées axialement vers la couronne 31 et s'étendent en saillie axiale par rapport au rebord 25 du plateau 21. Ces ailettes 240 sont avantageusement inclinées ou de forme courbe par un bon rendement et se raccordent à leur périphérie externe au rebord 25 et présentent à leur extrémité libre une face 241 qui s'étend en regard de la couronne 31, et parallèlement à celle-ci. Cette face 241 se raccorde à une face inclinée interne 242, elle même se raccordant au plateau de réaction 21. Un faible intervalle existe entre la face 241 et la couronne 31.

Bien entendu, la deuxième masse 2 présente à sa périphérie interne, radialement en dessous de; la face de friction 29, du plateau 21, des trous d'aérations 23 (figures 1 et 2), 230 (figure 3), en sorte qu'un écoulement d'air, favorisé par les ailettes 240, a lieu entre la face interne du plateau de réaction 21, tournée à l'opposé de la face de friction 29, et la première masse 1. Le plateau 21, ainsi que les moyens de palier 4, 40 sont bien refroidis.

Dans tous les cas, le plateau de réaction 21, par son rebord 25, s'étend radialement au-dessus du flasque 6 de la première masse en sorte que l'on augmente la masse thermique de ce plateau 21, ce qui est favorable.

Bien entendu, la couronne de démarreur 31 peut être monobloc avec le disque de support métallique 32 en étant obtenue par repoussage de métal d'une zone périphérique axiale du disque 32.

Bien entendu, on peut inverser les structures. C'est-à-dire dans les figures 1 et 2, on peut équiper le plateau 21 d'ailettes, la rondelle de guidage 62 étant fixée au rebord 6 de la même manière qu'est fixée la rondelle de fermeture 620 au rebord 610.

D'une manière générale, la rondelle de guidage 62 délimite avec le plateau de réaction 21 un canal dans lequel circule l'air venant des trous d'aération 23 ; la circulation de l'air étant favorisé par les ailettes 240. A la figure 3, l'air provenant des trous 230 balaye les organes élastiques 30. Le plateau 21 est donc bien refroidit.

D'une manière générale, les ailettes 240 sont très efficaces du fait, abstraction faite de la couronne 31, qu'elles sont implantées, ainsi que le rebord 25, radialement au-dessus de la première masse 1 sur une circonférence de grand diamètre. Dans cette figure 3, les ailettes 240 sont implantées radialement en dessous de la denture de la couronne 31.

Le disque 32 est fixé à sa périphérie interne du flasque 6, ici par une série de rivets 34 implantés sur une même première circonférence.

En variante, on peut remplacer le rivetage par un soudage, par exemple un soudage par transparence à l'aide d'un laser. Une première zone interne de fixation 34 intervient donc entre le flasque 6 ici métallique et le disque de support 32 ici métallique.

Le vilebrequin du moteur du véhicule vibre axialement en sorte que l'on prévoit ici une deuxième zone externe de fixation 33 (figures 1 et 2), 133 (figure 3) entre la périphérie externe du flasque 6, raidit par son rebord 61, 610 et le disque 32.

A la figure 3, cette deuxième zone consiste en un soudage 133, plus précisément en un cordon de soudure. Dans les figures 1 et 2, il s'agit d'un rivetage à l'aide d'une série de rivets implantée sur une même seconde circonférence de diamètre supérieur à celle de la première circonférence des rivets 34. Ainsi, on contre les vibrations axiales de l'arbre de sortie du moteur du véhicule et le flasque 6 est plus raide.

Bien entendu, dans les figures 1 et 2, on peut remplacer le rivetage par un soudage comme à la figure 3 et vice versa.

Dans la figure 3, le disque 32 est accolé au flasque 6. Dans les figures 1 et 2, le disque 32 est en contact avec le flasque 6 seulement au niveau de ces zones de fixation interne 34 et externe 33, en sorte que l'on garantit une bonne orientation transversale du flasque 6.

Dans ces figures 1 et 2, le flasque 6 présente des zones planes d'appui 37 à sa périphérie externe pour la fixation du disque 32 à l'aide des rivets 33. On notera que les rivets internes de fixation 34 des figures 1 et 2 sont alignés axialement avec les trous d'aération 23, qui peuvent avoir une forme évasée en direction de la première masse 1. Les trous 23 peuvent être cylindriques ou circonférentiellement de forme oblongue.

Le flasque 6 est pincé dans les figures 1 et 2 entre le premier moyeu 5 et le deuxième moyeu 7. Plus précisément, dans ce mode de réalisation, les organes de fixation 10 consistent en des longues vis de fixation traversant axialement la rondelle d'appui 51, les deux moyeux 5, 7 et le flasque 6, à la faveur de trous axialement alignés pratiqués dans ceux-ci, pour se visser dans le vilebrequin. La tête des vis 10 prend appui sur la rondelle d'appui 51 servant au calage axial de la bague interne du roulement à billes 4.

Le second moyeu 7 présente localement une série de creusures (non référencée) pour logement des têtes de rivets 53 traversant à la faveur de trous axialement alignés le flasque 6, le premier moyeu 5 et la rondelle 51. Ainsi, on peut former par rivetage un sous ensemble formant double volant amortisseur de torsion comportant la première masse 1, accouplée la deuxième masse 2 par l'amortisseur de torsion précité, que l'on vient rapporter ensuite à l'aide des vis 10 sur le second moyeu 7 et le vilebrequin.

D'une manière générale, le flasque 6 est solidaire par avance du premier moyeu 5, 50 pour formation par avance du double volant amortisseur de torsion que l'on vient rapporter ensuite sur le vilebrequin via le second moyeu 7.

Avantageusement on peut tester par avance le double volant avant sa fixation sur le vilebrequin.

A la figure 3, la fixation du flasque 6 est réalisée par soudage. Plus précisément, un cordon de soudure 54 intervient entre la périphérie interne du flasque 6 et la périphérie externe du premier moyeu tubulaire 50. Le cordon de soudure 54 est situé du côté du flasque 6 opposé au second moyeu 7. Le premier moyeu 50 porte à son extrémité axiale libre le roulement 40. En variante la fixation est réalisé par sertissage, la flasque 6 présentant des dents à sa périphérie interne taillant des sillons dans le moyeu 50 présentant un épaulement d'appui pour le flasque 6. En écrasant la matière du moyeu 50 au contact du flasque 6 , on fixe le flasque.

L'autre extrémité axiale du moyeu 50 sert au centrage et pénètre à l'intérieur du second moyeu 7. La périphérie externe du moyeu 50 est ainsi en contact intime avec la périphérie interne (l'alésage interne) du second moyeu 7. Le premier moyeu 50 constitue donc un manchon de centrage portant intérieurement le palier pilote 9 via une bague fendue 55 intermédiaire pour l'auto-ajustage du palier pilote 9.

La bague 55 se monte à l'intérieur du moyeu tubulaire 50, à l'avant ou à l'arrière de celui-ci. La bague 55 est épaulée pour coopérer ici avec la tranche de l'extrémité axiale du moyeu 50 opposée au roulement 40. La bague comporte au moins une fente et est intercalée radialement entre la périphérie interne du moyeu 50 et la périphérie externe du palier pilote. Cette disposition est applicable dans les figures 1 et 2. La bague 55 permet de réduire au maximum l'épaisseur du tube 50 constituant le premier moyeu et évite d'avoir à usiner intérieurement le premier moyeu. Dans la figure 3, les trous d'aération 230 ont une autre fonction. Ils ont une forme cylindrique et permettent le passage d'au moins un outil pour le vissage de vis de fixation 101 servant à assembler le flasque 6, et donc la première masse 1, au second moyeu 7. Les vis 101 sont courtes. Leur tête est en appui contre la face du flasque 6 tournée vers les trous 230. Les vis 101 traversent à la faveur de trous le flasque 6 à sa périphérie interne pour se visser dans le second moyeu 7 doté de trous taraudés à cet effet. Les trous 230 sont réalisés dans le moyeu interne 220.

Les têtes de vis 101 présentent des empreintes pour le ou les outils de vissage. Ainsi, le double volant amortisseur avec ses deux masses 1, 2 est rapporté par les vis 101 sur le second moyeu 7 avec centrage entre les deux moyeux 7, 50 grâce au premier moyeu 50 s'étendant en saillie axiale par rapport au flasque 6, pour former de manière précitée, un manchon de centrage.

Le second moyeu 7 est fixé par avance au vilebrequin du moteur du véhicule à l'aide des organes de fixation 100 précités ou de tout autre moyen de fixation. Ces organes 100 consistent ici en des vis 100 plus courtes que celles des figures 1 et 2. Les vis 100 sont plus longues que les vis 101, qui peuvent avoir un diamètre inférieur à celui des vis 100. En effet, les vis 100 traversent uniquement le second moyeu 7 pour se visser dans le vilebrequin. Le second moyeu 7 est creusé localement à sa périphérie interne pour logement des têtes de vis 100, ici à têtes cylindriques dotées d'empreintes comme les vis 101.

Ainsi, on peut démonter, grâce au vis 101, le double volant amortisseur de torsion en laissant en place le second moyeu 7 fixé au vilebrequin par les vis 100.

On notera que le premier moyeu 50 centre le flasque de support 6, dont la périphérie interne est en contact intime avec la périphérie externe du moyeu 50.

Bien entendu, dans les figures 1 et 2, on peut utiliser deux séries d'organes de fixation comme à la figure 3.

On notera que le flasque 6 recouvre la tête de vis 100 et que le premier moyeu 50 vient se centrer dans le second moyeu 7.

A la figure 1, le premier moyeu 5 présente à sa périphérie interne, du côté opposé au roulement 4, un manchon 60 axiale, servant de centreur au flasque 6 par sa périphérie externe en contact intime avec la périphérie interne du flasque 6. La périphérie externe du manchon 60 est en contact intime avec la périphérie interne (l'alésage interne) du deuxième moyeu 7 venant se centrer sur le manchon 60 avant sa fixation au vilebrequin.

Dans la figure 2, on a inversé les structures ; le moyeu 7 étant prolongé à son extrémité libre par un manchon axial 160 servant de centreur au premier moyeu 5.

La périphérie externe du manchon 160 est en contact intime avec la périphérie interne du premier moyeu 5.

Le flasque 6 est centré, à sa périphérie interne, par le premier moyeu 5 entaillé à cet effet. Le centrage du flasque 6 est réalisé radialement au-dessus du manchon 160.

Dans tous les cas, le flasque 6 est centré par le premier moyeu 5, 50.

Les manchons 60, 160 ou le premier moyeu 50 portent intérieurement les moyens de palier 9.

Dans les figures 1 et 2, le premier moyeu 5 et le second moyeu 7 ont des alésages internes étagés en diamètre pour d'une part que le moyeu du disque de friction puisse pénétrer dans le premier moyeu 5 et, d'autre part pour montage du pallier pilote 9 de diamètre externe inférieur à celui du moyeu du disque de friction. Le premier moyeu 5 a donc un alésage interne de plus faible diamètre au niveau de son extrémité voisine du second moyeu et un alésage interne de plus grand diamètre à son extrémité pour pénétration du moyeu du disque de friction.

A la figure 3, le changement de diamètre de l'alésage interne du premier moyeu 50 est réalisé à la faveur de la bague 55, qui évite ainsi d'avoir à étager intérieurement le premier moyeu 50 et simplifie donc la fabrication. Les usinages sont réduits avantageusement, la bague 55 comporte plusieurs fentes réparties de manière régulière.

On appréciera que le double volant amortisseur des figures 1 à 3 peut se montrer également sur le vilebrequin doté ou non d'un manchon de centrage 160. Dans ce cas, l'extrémité du vilebrequin comporte centralement un trou lorsque pour le centrage relatif entre le premier moyeu 5, 50 et le vilebrequin de manière identique aux réalisations des figures 1 à 3. D'une manière générale, on forme de manière unitaire un double volant amortisseur de torsion grâce à la fixation, à l'aide des rivets 53 ou du soudage du flasque 6 sur le premier moyeu. Le sous-ensemble est ensuite fixé soit sur un deuxième moyeu, soit sur le vilebrequin.

Ce double volant peut être équipé des organes élastiques 3, 30.

Dans le mode de réalisation des figures 1 et 2, le double volant est par exemple du type de celui décrit dans le document FR-A-2 736 116 auquel on se reportera pour plus de précisions.

Un voile secondaire 26 métallique est donc fixé par des rivets 27 au moyeu interne 22, radialement au-dessous des trous d'aération 23.

Ce voile 26 pénètre donc par sa périphérie externe à l'intérieur d'un logement annulaire ou chambre étanche 63 délimité par le flasque 6, la rondelle de guidage 62 et le rebord 61. Deux rondelles d'étanchéité 66, 67 ferment de manière étanche le logement 63, à l'intérieur duquel sont logés des ressorts à boudin 3 constituant les organes élastiques précités, intervenant circonférentiellement entre les deux masses. Ainsi, les rivets 27 ne servent pas à la fixation des rondelles d'étanchéité. Bien entendu, le flasque métallique 6 et la rondelle de guidage métallique 62 sont emboutis en direction opposée au disque 26, vers l'extérieur, respectivement en 68, 69 pour formation d'un canal annulaire pour les ressorts 3 ; le logement 63 étant rempli de graisse pour lubrifier les ressorts 3.

Les emboutis 68, 69 sont interrompus par déformations respectivement 64, 65 pour appui des extrémités circonférentielles des ressorts logés ainsi dans des poches. Pour la position de repos du double volant, les bras du voile 26 sont en regard des déformations 64, 65.

La périphérie externe du voile 26 est décalée axialement en direction du flasque 6 par rapport à la périphérie interne du voile 6 en contact avec la face interne du moyeu interne. Les rivets 27 sont en face des trous 70.

Les ressorts 3 sont précintrés et ont une forme courbe. Le voile 26 présente à l'intérieur du logement 63 des bras comme par exemple à la figure 2 du document FR-A-2 736 116.

Les bras délimitent des échancrures dans lesquelles sont logés les ressorts 3.

Les bras et donc le voile 26 s'étendent radialement entre le flasque 6 et la rondelle de guidage 62. La rondelle d'étanchéité 66 est fixé sur le flasque 6 suivant une caractéristique à l'aide des rivets internes 34 de fixation du disque 32 au flasque 6. La rondelle 66 est inclinée en direction du voile 26 et prend appui à sa périphérie externe sur ce voile 26. La rondelle d'étanchéité 67 est fixée au voile 26 à l'aide d'une série de rivets 134 implantés en vis à vis des trous d'aération 23 dans l'alignement axial avec ceux-ci. Les rivets 134 sont formés par extrusion à partir du voile 26 ici en tôle emboutie. La rondelle 67 prend appui à sa périphérie externe sur la rondelle de guidage 62 à la périphérie interne de celle-ci en étant implantés radialement au-dessus des rivets 134, 34, 27. La rondelle 67 est globalement plate. Ainsi, la paroi 74 remplace les bouchons connus par exemple du document FR-A-2 736 116 et les rivets 27 présente une tête creuse formant un pion 28 pour entraîner en rotation, éventuellement après rattrapage d'un jeu circonférentiel, une rondelle de frottement appartenant aux moyens de frottement à action axiale 8. Ces moyens 8 sont par exemple du type de ceux décrits dans le document FR-A-2 736 116 et comportent donc une rondelle de frottement dotée à sa périphérie externe d'échancrures dans lesquelles pénètrent, sans jeu ou avec jeu circonférentiel, les pions 28 pour entraînement en rotation de la rondelle de frottement par la deuxième masse 2.

La rondelle de frottement est en appui contre l'épaulement transversal du premier moyeu 5 et contre une rondelle d'application liée en rotation au premier moyeu à la faveur de pattes radiales, formant tenons, pénétrant dans des rainures axiales, formant mortaises, réalisées dans une surépaisseur 52 de diamètre externe supérieur à celui de l'extrémité libre du premier moyeu portant le roulement 4. La rondelle d'application est soumise à l'action d'une rondelle élastique à action axiale, ici une rondelle Belleville, en appui sur un circlips de calage monté dans une gorge annulaire réalisée dans la surépaisseur 52 du premier moyeu 5. Ainsi, la rondelle élastique serre la rondelle de frottement entre deux faces ou surfaces de la première masse 1 et lors d'un mouvement relatif entre les deux masses 1, 2, la rondelle de frottement, entraînée par la deuxième masse 2, frotte contre les deux surfaces de la première masse 1.

Le rebord 61 du flasque est étagé en diamètre à sa périphérie externe et présente à son extrémité libre un tronçon externe de plus grand diamètre raccordé par un épaulement au rebord 61 proprement dit. L'épaulement sert au calage axial dans un sens de la rondelle de guidage 62 montée à l'intérieur du tronçon externe du rebord 6. La rondelle de guidage 62, à sa périphérie externe, est en contact intime, donc centrée, avec la périphérie interne du tronçon externe du rebord 61. La fixation de la rondelle 62 au rebord 61 du flasque 6 est réalisé par soudage des extrémités libres du tronçon externe du rebord 6 et de l'anneau d'orientation axiale que présente la rondelle 62 à sa périphérie externe. C'est cet anneau qui est enfilé à l'intérieur du tronçon externe du rebord 61 et permet le centrage de la rondelle 62.

Le soudage consiste en un cordon de soudure. Le plateau de réaction 21 présente une face interne, dirigée vers la première masse 1, creusée en 24 pour réduction de l'encombrement axial.

La creusure 24 est délimitée par le rebord 25 et présente un fond plat d'orientation transversale en regard des extrémités libres du rebord 61 du flasque 6 et de l'anneau de la rondelle de guidage 62 pour éviter toute interférence. Ce fond plat est raccordé par un flanc incliné axialement vers la première masse 1 et dirigé radialement vers l'intérieur pour éviter toute interférence avec les déformations 69 de la rondelle de guidage.

La creusure 24 a une forme trapézoïdale. Lors d'un mouvement angulaire relatif entre les deux masses, le voile 26 se déplace par rapport au flasque 6 et à la rondelle de guidage 62 avec une compression des ressorts 3.

Bien entendu, la rondelle de guidage 62 peut être fixée par sertissage au rebord 61. Par exemple, le rebord 61 présente à son extrémité libre des mortaises dans lesquelles rentrent des tenons en forme de pattes appartenant à la rondelle de guidage 62.

Ensuite, on écrase les bords des mortaises au contact des pattes pour réaliser un sertissage. La présence du tronçon externe du rebord 61 et de l'anneau de la rondelle 62 n'est pas obligatoire.

Néanmoins, la présence de l'anneau de la rondelle 62 permet un raidissement de ladite rondelle 62.

Ainsi qu'il ressort à l'évidence de la description, la première masse 1, abstraction faite du premier moyeu 5 et des ressorts 3, ne comporte que des pièces métalliques de forme simples et légères, ici en tôle emboutie, à savoir le disque 32, le flasque 6, la rondelle de guidage 62 et le voile secondaire 26. Les rondelles d'étanchéité 66, 67 sont également métalliques de faible épaisseur pour leur conférer une élasticité. La rondelle 66 est en appui élastique sur le voile 26 et la rondelle 67 en appui élastique sur la périphérie interne de la rondelle de guidage 62 de grand diamètre interne. Les zones d'appui 37 du flasque 6 sont dans le plan de la périphérie interne du flasque 6.

Les zones 37 appartiennent au sommet des emboutis 68 du flasque 6, dirigés vers l'extérieur en direction opposée au voile 26. Les emboutis 68 se raccordent à une partie transversale 164 dans le plan des déformations 64.

La partie 164 est donc prolongée par les déformations 64 d'appui des ressorts et se raccorde à sa périphérie interne à la périphérie interne du flasque 6, qui est dans le plan des appuis 37.

Ainsi, le flasque 6 comporte une partie intermédiaire 164 d'orientation transversale décalée axialement en direction du voile 26 par rapport à sa périphérie interne et externe, disposées dans un même plan transversal. On notera que le moyeu interne 22 est décalé axialement en direction du flasque 6 par rapport à la face de friction 29 et au plateau de réaction proprement dit. Bien entendu, l'embout 69 est également dirigé axialement vers l'extérieur, ici vers la creusure 24. Le voile 26 s'étend radialement vers l'intérieur pour caler axialement la bague externe du roulement 4.

Dans les figures 1 et 2, les moyens de frottement 8 sont portés par le premier moyeu 5 et sont implantés axialement entre le roulement 4 et un épaulement transversal du premier moyeu 5, tourné vers la seconde masse.

Dans la figure 3, les moyens de frottement 80 sont portés par le flasque 6 de support de la première masse 1. Ces moyens 80 s'étendent radialement au-dessus du roulement 40 et des vis de fixation 100, 101.

Ces moyens 80 comportent des pions 128 appartenant à des tourillons 127 conformés pour former des rivets à leur extrémité opposée au pion. Le flasque 6 présente des trous axialement en vis à vis des pions 128. Ces trous non référencés sont obturés par l'extrémité axiale libre de second moyeu 7. Les tourillons 127 traversent à la faveur de trous le moyeu interne 220 comme décrit par exemple dans le document EP-A-0 798 490. Les tourillons 127 traversent donc une rondelle élastique à action axiale (non référencée) et ont une tête écrasée au contact de la rondelle élastique et une collerette de blocage en contact avec la face du moyeu interne 220, dirigée vers le flasque 6. La rondelle élastique à action axiale appartient au limiteur de couple 250. La rondelle comporte ici à sa périphérie externe une partie inclinée en forme de rondelle Belleville. Cette partie est reliée à sa périphérie interne à une partie de raccordement elle même reliée à la périphérie interne de la rondelle élastique traversée par les tourillons 127.

La partie de raccordement est dotée de trous (non référencés) dans lesquels s'engagent, de manière complémentaire, des pattes internes, appartenant à une rondelle d'application (non référencée). La rondelle d'application appartient au limiteur de couple 250 et est liée en rotation par ses pattes internes à la rondelle élastique à action axiale.

La rondelle d'application forme l'un des flancs latéraux d'une gorge dans laquelle s'engage un anneau interne (non référencé) d'orientation transversale que comporte le plateau de réaction 21 à sa périphérie interne.

L'anneau interne est moins épais que le plateau de réaction. L'autre flanc latéral de la gorge est formé par la face d'un voile que comporte à sa périphérie externe, en saillie radiale vers l'extérieur, le moyeu interne 220 décalé axialement en direction du flasque 6 par rapport à la face de friction 29.

Le fond de la gorge est constitué par une face annulaire d'orientation axiale que comporte le moyeu 220 à sa périphérie externe. Ce fond forme une portée de centrage pour la périphérie interne de l'anneau interne. Ainsi, le plateau de réaction est monté de manière rotative sur le fond de la gorge appartenant au limiteur de couple 250.

La rondelle élastique à action axiale du limiteur de couple 250 prend appui sur la rondelle d'application pour serrer l'anneau interne du plateau de réaction entre les flancs latéraux de la gorge, c'est-à-dire entre la rondelle d'application et le voile du moyeu interne. Normalement, le serrage de la rondelle élastique est tel qu'aucun mouvement de rotation ne se produit entre le moyeu interne 220 et le plateau de réaction 21, monté rotatif sur le fond de la gorge. En cas de surcoupe, un glissement relatif se produit entre le plateau 21 et le moyeu 220.

La rondelle de fermeture 620 est fixée par un cordon de soudage à l'extrémité libre du rebord 610.

Localement, des entretoises 81 étagées en diamètre, relient la rondelle de fermeture 620 au flasque 6. Des rivets 82 traversent à la faveur de trous les entretoises 81, le flasque 6 et la rondelle 620 pour assurer la fixation des entretoises au flasque 6 et à la rondelle 620 fixées ainsi par deux zones de fixation, décalées radialement l'une par rapport à l'autre, au flasque 6.

Les entretoises 81 s'étendent radialement au-dessus des rivets internes de fixation 34.

Les rivets 34 traversent des ouvertures axialement alignées réalisées dans le disque 32, le flasque 6, une plaque 83 métallique et une rondelle capot 84. Les rivets 34 assurent donc également la fixation des pièces 83, 84 au flasque 6. Plus précisément, le disque 32 et la plaque 83, ici en tôle emboutie, sont disposées de part et d'autre du flasque 6, radialement au-dessus de la paroi 74 du second moyeu 7. La rondelle 84 est axialement élastique et appartient aux moyens de frottement à action axiale 80.

L'élasticité de la rondelle 84 est obtenue par exemple en dotant la partie intermédiaire de la rondelle 84 de fentes oblongues. La rondelle 84 a une forme tronconique à l'état libre et est inclinée en direction du flasque 6.

La plaque 83 est fixée également au flasque 6 à la faveur des entretoises 81.

A cet effet, l'extrémité libre de plus petit diamètre d'une entretoise 81 est engagée de manière complémentaire dans un trou 85 de la plaque 83. Bien entendu, la longueur axiale de l'extrémité libre de l'entretoise 81 est inférieure à l'épaisseur de la plaque 81.

Ainsi, la plaque 83 est fixée, radialement au-dessus des rivets 34, au flasque 6 via les entretoises 81 et les rivets 82.

Les entretoises 81 et la plaque 83 permettent donc d'augmenter encore l'inertie de la première masse et ce, de manière simple et économique. Bien entendu, le disque 32 est troué en regard des rivets 82, tandis que la rondelle 620 est creusé pour logement des pieds des rivets 82. Les entretoises 81 et les rivets 82 assurent une fixation de la rondelle 620 et de la plaque 83 au flasque 6. La plaque 83 à sa périphérie externe décalée axialement en direction de la masse pour dégager la zone de raccordement du rebord 610 au flasque 6.

La plaque 83 présente des échancrures à sa périphérie interne dans lesquelles s'engagent des pattes radiales que présente une rondelle d'application à sa périphérie interne.

La rondelle d'application appartient aux moyens de frottement 80 et offre une face de friction à une rondelle de frottement en contact avec la face interne du flasque 6 tournée vers la deuxième masse 2.

Une première rondelle de frottement est serrée entre la face interne du flasque 6 et la rondelle d'application sous l'action d'une rondelle élastique à action axiale, ici une rondelle Belleville non référencée, prenant appui sur la rondelle capot 84 pour solliciter la rondelle d'application, mobile axialement, en direction du flasque 6.

La rondelle capot 84 prend appui à sa périphérie interne sur une seconde rondelle de frottement pour solliciter axialement celle-ci en direction de la face interne du flasque 6.

La seconde rondelle de frottement est en matière synthétique et engrène à sa périphérie interne avec des pions 128. Pour se faire, la seconde rondelle de frottement présente à sa périphérie interne des échancrures dans lesquelles pénètrent de manière complémentaire, les pions 128.

A sa périphérie externe, la seconde rondelle de frottement présente une denture mâle, tandis que la première rondelle de frottement présente à sa périphérie interne une denture femelle. Chaque denture comporte une alternance de dents et d'échancrures avantageusement de forme trapézoïdale. Les dents de la denture mâle pénètrent à jeu dans les échancrures de la denture femelle et visseras. Il est ainsi formé des moyens d'engrènement à jeu circonférentiel.

La première rondelle de frottement engrène donc à jeu circonférentiel avec la deuxième rondelle de frottement. La rondelle élastique à action axiale exerce une charge plus élevée sur la première rondelle de frottement 84, sur la deuxième rondelle de frottement frottant en permanence lors d'un mouvement relatif entre les deux masses.

La première rondelle de frottement intervient en différé après rattrapage du jeu circonférentiel des moyens d'engrènement à jeu.

La plaque 83 permet donc de loger, dans son épaisseur, les moyens de frottements comprenant les deux rondelles de frottement, la rondelle d'application, la rondelle Belleville et la rondelle 84. Les moyens de frottement 80 sont portés par le flasque 6 et la plaque 83 et comportent une deuxième rondelle de frottement entraînée en rotation par les pions 128 solidaires de la deuxième masse 2.

Une deuxième série de tourillons 86 est portée par la périphérie externe de la rondelle de fermeture 620 et du flasque 6. Chaque tourillon comporte une collerette saillante radialement et est engagé à l'une de ses extrémités axiales dans une ouverture de la rondelle 620 et à l'autre de ses extrémités axiales dans des ouvertures axialement alignés réalisées dans la plaque 83, le flasque 6 et le disque 32.

La collerette de chaque tourillon est en contact par l'une de ses faces avec la périphérie externe de la plaque 83. L'autre face de la collerette est en contact avec une première pièce d'articulation comme décrit par exemple dans le document FR97/12 115 précité. La première pièce d'articulation est traversée par les tourillons 86 et appartient à un boîtier 87, ici de forme cylindrique à l'intérieur duquel est monté un piston 88 solidaire d'une tige 89 traversant une rondelle 90 solidaire de l'extrémité inférieure du boîtier 87. La tige 89 présente à sa périphérie interne une seconde pièce d'articulation montée sur les premiers tourillons 127 implantés sur une circonférence de diamètre inférieur à celle des seconds tourillons 86.

Des ressorts hélicoïdaux 30, montés de manière concentrique, interviennent entre le piston 88 et la rondelle 90.

Les ressorts 30 travaillent donc en compression lors d'un mouvement relatif entre les deux masses et appartiennent à des cassettes comprenant le boîtier 87, le piston 88 et la tige 89.

Bien entendu on peut remplacer les ressorts 30 par des ressorts de traction avec des boucles d'extrémité engagées sur les tourillons 127,86.

On appréciera que les trous du flasque 6, situés en regard des pions 28,128, sont obturés dans tous les cas par le second moyeu. L'intérieur de la première masse est donc protégée. Les moyens de frottement 8,80 sont donc protégés contre toute pollution par le second moyeu 7. La rondelle de guidage 62 et la rondelle de fermeture ont un grand diamètre intérieur et entourent à distance le moyeu interne 22,220.

Grâce au second moyeu 7 le disque 32 peut venir très près des têtes des vis 200 s'étendant en saillie par rapport à la paroi 75 du carter du moteur à combustion interne.

Dans les figures 1 et 2 des pièces anti-usure, par exemple des goulottes peuvent être interposées entre la périphérie externe des ressorts 3 et le logement 63.

Ainsi qu'on l'aura compris dans la figure 3 le premier moyeu 50 est un tube et forme donc à son extrémité opposée au roulement 40 un manchon de centrage comme le manchon 60 de la figure 1. Le premier moyeu 50 est donc de très faible épaisseur ce qui permet d'une part de diminuer encore la taille des moyens de palier 40 implantés en dessous des trous 230 d'aération et de passage d'au moins un outil de fixation des vis 100, 101 et d'autre part, d'allonger encore les cassettes et les ressorts 30.

A la figure 2 on a représenté en pointillés en 300 l'arbre menant (le vilebrequin), en 301 l'arbre mené (l'arbre d'entrée de la boîte de vitesses) et en 302 le moyeu du disque de friction.

Bien entendu dans le mode de réalisation des figures 1 et 2, on peut augmenter le nombre de ressorts 3 et/ou implanter ceux-ci sur deux circonférences de diamètre différent.

Les ressorts 3 peuvent ne pas être lubrifiés comme décrit par exemple dans le document FR-A-2 166 604.

A la figure 3 les cassettes des ressorts 30 sont réparties circonférentiellement de manière régulière en étoile. Les cassettes alternent circonférentiellement avec les entretoises 81 augmentant l'inertie de la masse primaire.

Dans toutes les figures le second moyeu 7 constitue, par son extrémité libre, une butée axiale d'appui pour le flasque de support 6, plus précisément pour la périphérie interne du flasque de support.

Bien entendu, les vis 100, 101 peuvent être implantées sur des diamètres différents au lieu d'être réparties de manière circonférentiellement alternées globalement sur la même circonférence (figure 3).

La fixation par soudage du flasque 6 au premier moyeu 50 permet de simplifier au maximum le premier moyeu 50.

En variante, comme visible en pointillés à la figure 2, le rebord 25 du plateau de réaction 21 peut être prolongé axialement en direction de la couronne de démarreur 31 par des ailettes de ventilation 340 réparties circonférentiellement de manière régulière. Dans ce cas, les ailettes 340 s'étendent radialement en partie au-dessus de la couronne 31.

Bien entendu, on peut prolonger le support 362 radialement vers l'extérieur de façon à ce que la couronne 31 s'étende radialement au-dessus du rebord 25 et des ailettes 340.

Comme visible à la figure 1 en pointillés, la couronne de démarreur 31 peut présenter des ailettes 440 en association avec les ailettes de la seconde masse. Les ailettes du plateau de réaction 21 sont alors plus courtes axialement. Les ailettes sont inclinées ou de forme courbe pour un bon rendement.

A la figure 4, le roulement 40 de la figure 3 est remplacé par un palier lisse 400 précité qui permet d'allonger encore la taille des cassettes et des ressorts 30.

Comme visible dans cette figure, la creusure 71 est formée à la faveur d'un changement de diamètre du second moyeu 7, qui présente ainsi une extrémité adjacente au vilebrequin de diamètre D1 inférieur. Le vilebrequin a donc une extrémité de diamètre D1 inférieur à la partie principale du second moyeu 7.

Le second moyeu 7 a donc une taille supérieure à celle de l'extrémité du vilebrequin.

on notera que le premier moyeu de la figure 4 ne diffère pas de celui de la figure 3, que part l'allongement axiale de la portée portant le palier 400 bloqué axialement par le circlips 260 et le changement de diamètre comme à la figure 3.

Dans les figures 3 et 4, le flasque 6 est embouti localement en direction de la seconde masse 2 pour former une portée par le seconde rondelle de frottement 80.

Grâce à la plaque 83, on peut loger aisément les moyens 80 entre le flasque 6 et les cassettes des ressorts 30 sans augmentation de l'encombrement axial. Le second moyeu 7 peut présenter un pion s'engageant dans le flasque 6 et/ou le premier moyeu 5 pour former un détrompeur. Bien entendu, on peut inverser les structures.

Dans la figure 5, le second moyeu 7 porte le rotor 500 d'une machine électrique 600 dotée également d'un stator 700 entourant ici le rotor 500.

Ce rotor 500 et le stator 700 sont des pièces coaxiales montées radialement l'une au-dessus de l'autre avec présence d'un entrefer 800 entre le rotor 500 et le stator 700. Le second moyeu 7, présente d'un seul tenant au voisinage de son extrémité libre, un second voile 701 nervuré de forme sinueuse saillant radialement vers l'extérieur et portant à sa périphérie externe un manchon 702 d'orientation axiale présentant à l'arrière un épaulement transversal 703 formant butée.

Des nervures 704 relient les extrémités du manchon au second voile 701.

Le second moyeu 7 porte des seconds moyens de palier 710, ici un roulement à billes, implantés à la racine du voile 701 du côté de celui-ci tourné vers l'arbre menant 300.

La bague intérieur du roulement 710 est emmanchée sur le second moyeu, tandis que la bague extérieure du roulement est emmanchée dans une douille épaulée 711 appartenant à la périphérie externe d'une pièce porteuse 712, présentant à sa périphérie externe une jupe 713 et des oreilles trouées 715 pour fixation de la pièce 712 à la paroi fixe du carter du moteur (non représenté) à l'aide de vis (non représentées). Le nombre d'oreilles dépend des applications.

La pièce 712 a une forme tortueuse pour venir au plus près du rotor 500, du manchon 702 et du voile 701.

Cette pièce 712 est nervurée en 714 et est destinée à se fixer sur le bloc moteur du véhicule à l'aide de vis (non visibles). L'entrefer entre le rotor 500 et le stator 700 est ainsi précis grâce au second moyens palier 710.

Bien entendu, le second moyeu 7 peut pénétrer dans le moteur comme dans les figures 1 à 4 et être doté d'une creusure, pour réception d'un joint d'étanchéité, ainsi que d'une première gorge.

De manière connue, le stator 500 et le rotor 700 comportent chacun un paquet de tôles isolées les unes des autres par oxydation ou par des rondelles isolantes. Les tôles sont en fer doux et reconstituent une couronne d'orientation axiale montée par exemple par frettage, respectivement sur le manchon 702 et la jupe 713. C'est pour cette raison que le manchon 702 présente un épaulement 703. En variante, le montage est réalisé par des cannelures, par soudage ou par vissage, ou par -des colonnettes et des rainures.

En variante, la jupe 713 et le manchon 702 présentent des parties coniques ainsi que les paquets de tôles. Le stator 700 présente des enroulements de fils électriques reliées à une unité de commande et de puissance. Ainsi, la machine 600 forme un alternateur et un démarreur pour le moteur à combustion interne.

La machine ici du type asynchrone peut être du type synchrone et donc présenter des aimants montés dans l'entrefer 800 ou enterrés. La machine 600 peut être à flux radial ou axial. En variante, la machine est commutation de flux à aimant seul ou hybride, à griffe sans balais, à reluctance variable, à simple et double existations, à flux transversal à effet vernies.

Cette machine 600 permet de filtrer les vibrations, de freiner et d'accélérer le moteur thermique du véhicule. Pour plus de précisions, on se reportera au document WO98/05832.

La première masse du double volant amortisseur de torsion porte donc, par l'intermédiaire du second moyeu 7, le rotor 500 d'une machine électrique 600.

Dans cette figure, on voit en 260 les garnitures de friction du disque de friction 261 présentant un moyeu 302 accouplé en rotation à l'arbre mené 301.

La première masse du double volant amortisseur de torsion porte donc, par l'intermédiaire du second moyeu 7, le rotor 500 d'une machine électrique 600.

Dans cette figure, on voit en 260 les garnitures de friction du disque de friction 261 présentant un moyeu 302 accouplé en rotation à l'arbre mené 301. Les garnitures de friction 261 sont solidaires d'un support 262 fixé par rivetage sur un voile 263 fixé par sertissage sur le moyeu 302. Les garnitures 260 sont donc accouplées de manière rigide-au moyeu 302. En outre, on voit en 264 le plateau de pression lié en rotation, avec mobilité axiale, au couvercle 265 par des languettes tangentielles 266.

Le plateau de réaction 21 présente à sa périphérie externe une jupe annulaire 350 d'orientation axiale venue ici de moulage avec le plateau 21. La jupe 350 est dirigée axialement en sens inverse par rapport au rebord 25 de la figure 3.

Le couvercle 265 présente à sa périphérie externe un rebord radial 267 troué pour sa fixation par des vis 268 à la jupe 350 entourant les garnitures 260. Le couvercle 265 porte de manière pivotante le diaphragme 269 ; ici, à l'aide de colonnettes 270 traversant axialement le diaphragme 269 pour porter à rivetage une couronne roulée offrant un appui secondaire 271 au diaphragme 269 en regard d'un appui primaire 272 formé par emboutissage dans le couvercle 269. En appuyant à l'aide d'une butée de débrayage, représentée schématiquement en 273, on fait pivoter le diaphragme 269 pour désengager l'embrayage.

Le flasque de support 6 est solidaire de la plaque 83 comme à la figure 3, mais le disque 32 est modifié et est implanté de l'autre côté du flasque 6. Le disque 32 est d'un seul tenant avec la rondelle de fermeture 620 formant avec le flaque 6 des cages dans lesquelles sont montées les entretoises 81, avec présence de deux séries de rivets 34, 82 comme à la figure 3. Ici, la plaque 83 est prise en sandwich entre le disque 32 et le flasque 6.

Les rivets 82 servent uniquement à fixer les entretoises 81, le flasque 6, à la pièce unique disque 32 - rondelle de fermeture 620.

Cette pièce 32-620 est en tôle emboutie. La rondelle de fermeture 620, et donc le disque 32, présente à sa périphérie externe un rebord annulaire d'orientation axiale entourant la jupe 350.

Le reste du volant amortisseur de torsion est identique à celui de la figure 3. Un e série de vis 10 fixe les moyeux 50, 7 au vilebrequin 300, comme à la figure 2.

Bien entendu, on peut utiliser deux série de vis comme dans les figures 3 et 4. Ici, le premier moyeu 50 présente un voile radial 150. Le flasque 6 est en appui contre la face du voile 150 tournée à l'opposé du second moyeu. Les vis 10 traversent le flasque 6, le voile 150 et le second moyeu 7 pour se visser dans le vilebrequin. Le flasque 6 est associé au premier moyeu 50.

Le flasque 6 peut être fixé par soudage ou collage sur le voile 150.

En variante, le flasque 6 est riveté sur le voile 150, le second moyeu 7 présentant alors des creusures comme à la figure 1 pour le logement des têtes des rivets de fixation. En variante, le flasque 6 est libre.

Ainsi qu'on l'aura compris, en alimentant électriquement les enroulements du stator 700, par exemple à l'aide d'un courant alternatif, on transforme la machine 600 en démarreur. Lorsque le moteur tourne, la machine forme un alternateur en produisant un courant alternatif que l'on redresse. Toutes les combinaisons sont envisageables. Ainsi, le double volant amortisseur de torsion de la figure 5 peut être du type de celui des figures 1 ou 2.

Il peut être équipé du palier 400 de la figure 3. A la figure 5, le flasque 6 est embouti localement au niveau des tourillons 86.

Le stator 500 est ici fixé au manchon 702 radialement en dessous du diamètre externe D1 des garnitures 260 et radialement au dessus du diamètre interne des garnitures 260 et de la face de friction 29. L'arbre 301 porte une cage 306 emmanché dans le premier moyeu 50 et renfermant un roulement pilote et un joint d'étanchéité dynamique.

Bien entendu, le rotor 500 peut être fixé plus bas radialement en dessous de la face de friction 29 et on peut combiner entre elles les différentes figures.

Ainsi, en variante, le second moyeu 7 à la forme de celui des figures 1 à 4 et le plateau de réaction 21, avantageusement d'un seul tenant, présente à sa périphérie externe une jupe annulaire d'orientation axiale du type de celle de la figure 5. Cette jupe porte alors à sa périphérie externe le rotor 500de la machine électrique, dont la stator est porté, en vis à vis du rotor, par la cloche d'embrayage solidaire de la boîte de vitesses.

Le stator entoure donc le rotor. En variante, l'embrayage est du type bidisque en sorte qu'il comporte deux disques de friction du type de celui de la figure 5 avec un plateau de pression intermédiaire entre les garnitures de friction des deux disques. La jupe de plateau de réaction est alors plus longue axialement ainsi que le rotor monté par exemple par frottage sur la périphérie externe de la jupe. L'encombrement radial de l'embrayage est ainsi diminué .

La deuxième masse du double volant amortisseur peut donc porter le rotor de la machine électrique. On obtient dans tous les cas une bonne filtration des vibrations pour une vitesse de rotation élevée du moteur à combustion interne.

Bien entendu, en variante, le flasque de support peut être supprimé et être remplacé par une partie massive. Ainsi à la figure 6 le premier moyeu 50 est d'un seul tenant avec un plateau 900.

Ce flasque 900 remplace les pièces 6, 83, 81 des figures 3 à 5. Le flasque 900 est ici venu de moulage avec le premier moyeu 50 en étant par exemple en fonte ou à base d'aluminium.

La face du flasque 900 tournée vers la seconde masse 2 forme une face de frottement pour les moyens de frottement à action axiale 80 du type de celui des figures 3 à 5.

Le second moyeu 7 porte directement le rotor 500 de la machine électrique 600. Le rotor 500 est entouré par le stator 700 solidaire du moteur 901 du véhicule automobile par exemple par vissage. Le second voile 701' est ici d'orientation transversale et a donc une forme plus simple que le flasque 701 de la figure 5. Le flasque 701 présente des ouvertures (non référencées) pour notamment alléger l'ensemble second moyeu 7 - flasque 701' - rotor 500.

Le roulement 710 de la figure 5 est supprimé en sorte que l'encombrement axial est réduit. Ici le flasque 701', le manchon 702, l'épaulement 703 et le second moyeu 7 sont d'un seul tenant en étant venus par exemple de moulage. La première masse 1 porte donc le rotor 500 par l'intermédiaire du second moyeu 7. La seconde masse 2 est analogue à celle de la figure 5.

On notera que les colonnettes 270 présentent des têtes profilées 271 formant directement l'appui secondaire du diaphragme 269. Le voile 263 est simplifié et n'a pas de forme tortueuse dans ce mode de réalisation.

En effet le support 262 présente à sa périphérie interne un pli et est fixé comme à la figure 5 à sa périphérie interne sur la périphérie externe du support 262 ici par rivetage.

Le premier moyeu 50 sert de centreur au second moyeu 7. La rondelle de fermeture 620 est simplifiée puisque les entretoises 81 sont supprimées et sont remplacées par de la matière du plateau 900.

Ainsi qu'on le sait, le couvercle 265 - le plateau de pression 264 et le diaphragme 269 forment un ensemble unitaire appelé mécanisme d'embrayage que l'on vient rapporter par son couvercle 269 sur le plateau de réaction 21, ici par vissage comme visible dans le haut de la figure 6.

Cet ensemble unitaire peut être équipé d'un dispositif de rattrapage d'usure pour compenser au moins l'usure de la ou des garnitures de friction du disque de friction. Un tel dispositif est décrit par exemple dans le document OE-A-42 39 289 auquel on se reportera pour plus de précisions.

Ainsi ce dispositif comporte des rampes et des contre-rampes. Les rampes étant associées à un anneau servant d'appui au diaphragme tandis que les contre-rampes sont associées soit au plateau de pression (figures 28 à 34), soit au couvercle (figures 1 à 27, figures 35 et 36).

Il est donc possible de créer un premier module unitaire comprenant le mécanisme d'embrayage et le double volant à l'exception du second moyeu 7 du fait que le flasque 900 est solidaire du premier moyeu 50. Il en est de même dans les autres formes de réalisation. Pour cela il suffit de réaliser des ouvertures en coïncidence axiale dans le diaphragme 269 - dans le voile 263 du disque de friction et dans la seconde masse 2 (ici dans le moyeu interne). Grâce à ses ouvertures on peut accéder au moins à l'aide d'un outil aux vis de fixation 10 (ou en variante les vis 101 des figures 3 et 4) pour fixer ce premier module unitaire sur le vilebrequin avec insertion d'un deuxième module comprenant le second moyeu 7 et le rotor 500 de la machine.

Ainsi avec les vis 10 on peut enfiler le second module sur le vis 10 en le rendant imperdable par exemple à l'aide des moyens souples de cale ou autre intervenant avec le second moyeu 7 et les vis 10. Ensuite on fixe l'ensemble sur le vilebrequin à l'aide d'au moins un outil de vissage passant à travers les trous alignés du diaphragme 269, du voile 263 et du moyeu interne 220.

En variante le deuxième module 7 - 500 est fixé par avance sur le vilebrequin à l'aide de vis du type des vis 100 de la figure 3 et on fixe le premier module sur le deuxième module 7 - 500 à l'aide de vis plus courtes du type des vis 101 de la figure 3.

Avantageusement le diamètre des ouvertures du diaphragme 269 est inférieur à celui des têtes des vis 10 ou 101.11 peut en être de même en ce qui concerne les ouvertures du disque de friction et du moyeu interne. Les vis de fixation 10, 101 sont ainsi imperdables.

On peut rendre les vis imperdables à l'aide de moyens élastiques souples ou d'un collage par exemple intervenant entre la partie filetée des vis 10, 101 et les trous réalisés dans le plateau 900 ou le flasque 6.

Ainsi on peut intégrer les vis de fixation au premier et/ou au deuxième module.

Bien entendu on peut emmancher à force le second moyeu 7 sur le premier moyeu 5, 50 pour former un ensemble premier module - second module. En variante on peut fixer par avance les deux moyeux par rivetage, collage, vissage, sertissage, etc. pour former un sous ensemble formant un tout avant fixation des vis sur le vilebrequin.

## Revendications

1. Double volant amortisseur de torsion comportant deux masses coaxiales (1,2) montées mobiles en rotation l'une par rapport à l'autre à l'encontre d'organes élastiques (3,30), dans lequel l'une des masses, dite première masse (1), est destinée à être fixée à un arbre menant, tandis que l'autre masse, dite seconde masse (2) comporte un plateau de réaction (21) pour sa liaison en rotation à un arbre mené, et dans lequel la première masse (1) présente centralement un moyeu (5, 50-7) s'étendant en saillie axiale et portant des moyens de paliers (4, 40) intervenant entre la seconde masse (2) et le moyeu (5, 50-7) pour montage rotatif de la seconde masse (2) sur la première masse (1), le moyeu (5, 50-7) étant en deux parties coaxiales axialement alignées, à savoir un premier moyeu (5, 50) supportant à rotation la seconde masse (2) par l'intermédiaire des moyens de palier (4, 40) portés par ce premier moyeu (5, 50)et un second moyeu (7), **caractérisé en ce que** le second moyeu (7) forme une entretoise axiale pour intervention entre l'arbre menant et le premier moyeu (4, 40) pour fixation à l'arbre menant.

2. Double volant selon la revendication 1, **caractérisé en ce que** le second moyeu (7) a une forme cylindrique et présente à sa périphérie externe une creusure (71) pour logement d'un joint d'étanchéité (77) pour intervention entre le second moyeu (7) et une paroi fixe (775, 36).

3. Double volant selon la revendication 2, **caractérisé en ce que** le second moyeu (7) présente à sa périphérie externe une première gorge (72) adjacente à la creusure (71).

4. Double volant selon la revendication 3, **caractérisé en ce que** le second moyeu (7) présente une deuxième gorge (73) de taille supérieure à la première gorge (72).

5. Double volant selon la revendication 4, **caractérisé en ce que** la seconde gorge (73) est délimitée latéralement par un flanc incliné.

6. Double volant selon la revendication 5, **caractérisé en ce que** le flanc incliné appartient à une paroi (74) s'étendant en saillie radiale vers l'extérieur à l'extrémité libre du second moyeu (7) opposée à la creusure.

7. Double volant selon la revendication 1, **caractérisé en ce que** le second moyeu (7) porte le rotor (500) d'une machine électrique (600).

8. Double volant selon la revendication 7 **caractérisé en ce que** le rotor (500) est monté sur un manchon (702) solidaire d'un voile (701) que présente le second moyeu (7) en saillie radiale.

9. Double volant selon la revendication 7 **caractérisé en ce que** le second moyeu (7) porte des seconds moyens de palier (710) portant le stator (700) de la machine électrique.

10. Double volant selon la revendication 9 **caractérisé en ce que** les seconds paliers sont implantés à la racine du voile (701).

11. Double volant selon la revendication 1, **caractérisé en ce que** la première masse (1) comporte un flasque de support (6) associé au premier moyeu (5, 50).

12. Double volant selon la revendication 11, **caractérisé en ce que** le flasque du support (6) est centré par le premier moyeu (5, 50).

13. Double volant selon la revendication 11, **caractérisé en ce que** le premier moyeu (5,50) et le flasque de support (6) sont traversés par des premiers organes de fixation (100, 101-10).

14. Double volant selon la revendication 13, **caractérisé en ce que** les premiers organes de fixation (10) traversent le second moyeu (7) pour fixation à l'arbre menant.

15. Double volant selon la revendication 13, **caractérisé en ce que** les premiers organes de fixation (101) se fixent dans le second moyeu (7) et alternent circonférentiellement avec des seconds organes de fixation (100) fixant le second moyeu (7) à l'arbre menant.

16. Double volant selon la revendication 11, **caractérisé en ce que** le flasque de support (6) est fixé par des premiers organes de fixation (101) au second moyeu (7), et **en ce que** des seconds moyens de fixation (100), sont prévus pour fixer le second moyeu (7) à l'arbre menant.

17. Double volant selon la revendication 11, **caractérisé en ce que** l'un des éléments premier moyeu (5, 50) - second moyeu (7) porte intérieurement un palier pilote (9) pour supporter l'extrémité de l'arbre mené.

18. Double volant selon la revendication 11, **caractérisé en ce qu'**un disque de support (32) est fixé intérieurement au flasque de support (6) radialement au-dessus du second moyeu (7) et du côté du flasque de support (6) tourné à l'opposé de la seconde masse (2).

19. Double volant selon la revendication 18, **caractérisé en ce qu'**une rondelle de fermeture (620) est solidaire du disque de support (32) et la rondelle de fermeture (620) portent des seconds tourillons (86) pour le montage à articulation d'organes élastiques (30) intervenant radialement entre les deux masses (1, 2).

20. Double volant selon la revendication 19, **caractérisé en ce que** la seconde masse porte à sa périphérie interne des premiers tourillons (127) pour le montage à articulation desdits organes élastiques (30).

21. Double volant selon la revendication 1, **caractérisé en ce que** la deuxième masse (2) est en deux parties coaxiales à savoir un plateau de réaction (21) monté rotatif sur un moyeu interne (220) décalé axialement par rapport au plateau de réaction (21) en direction de la première masse et **en ce qu'**un limiteur de couple (250) du type à friction intervient entre le plateau de réaction (21) et le moyeu interne (220).

## Patentansprüche

1. Zweimassenschwungrad-Torsionsdämpfer mit zwei koaxialen Massen (1, 2), die relativ zueinander gegen elastische Organe (3, 30) drehbeweglich angebracht sind, wobei eine der Massen, die so genannte erste Masse (1), dazu bestimmt ist, an einer Antriebswelle angebracht zu werden, während die andere Masse, die so genannte zweite Masse (2) eine Gegendruckplatte (21) für ihre Drehverbindung mit einer Abtriebswelle umfasst, und wobei die erste Masse (1) mittig eine Nabe (5, 50 - 7) aufweist, die sich axial vorspringend erstreckt und Lagermittel (4, 40) trägt, die zwischen der zweiten Masse (2) und der Nabe (5, 50 - 7) zur drehbaren Montage der zweiten Masse (2) an der ersten Masse (1) vorhanden sind, wobei die Nabe (5, 50 - 7) aus zwei koaxialen, axial ausgerichteten Teilen besteht, und zwar einer ersten Nabe (5, 50), die die zweite Masse (2) mittels der Lagermittel (4, 40) drehbar trägt, welche durch diese erste Nabe (5, 50) getragen werden, und eine zweite Nabe (7), **dadurch gekennzeichnet, dass** die zweite Nabe (7) einen axialen Abstandshalter bildet, der zwischen der Antriebswelle und der ersten Nabe (4, 40) zur Befestigung an der Antriebswelle vorhanden ist.

2. Zweimassenschwungrad nach Anspruch 1, **dadurch gekennzeichnet, dass** die zweite Nabe (7) Zylinderform hat und an ihrer äußeren Peripherie eine Einsenkung (71) für die Aufnahme einer Dichtung (77) aufweist, die zwischen der zweiten Nabe (7) und einer festen Wand (775, 36) vorhanden ist.

3. Zweimassenschwungrad nach Anspruch 2, **dadurch gekennzeichnet, dass** die zweite Nabe (7) an ihrer äußeren Peripherie benachbart zu der Einsenkung (71) eine erste Nut (72) aufweist.

4. Zweimassenschwungrad nach Anspruch 3, **dadurch gekennzeichnet, dass** die zweite Nabe (7) eine zweite Nut (73) von größerer Breite als die erste Nut (72) aufweist.

5. Zweimassenschwungrad nach Anspruch 4, **dadurch gekennzeichnet, dass** die zweite Nut (73) seitlich durch eine geneigte Flanke begrenzt ist.

6. Zweimassenschwungrad nach Anspruch 5, **dadurch gekennzeichnet, dass** die geneigte Flanke zu einer Wand (74) gehört, sich radial vorspringend nach außen zum freien Ende der zweiten Nabe (7) gegenüber der Einsenkung erstreckt.

7. Zweimassenschwungrad nach Anspruch 1, **dadurch gekennzeichnet, dass** die zweite Nabe (7) den Rotor (500) einer elektrischen Maschine (600) trägt.

8. Zweimassenschwungrad nach Anspruch 7, **dadurch gekennzeichnet, dass** der Rotor (500) auf einer Muffe (702) angebracht ist, die fest mit einer Zwischenplatte (701) verbunden ist, die von der zweiten Nabe (7) radial vorspringend aufgewiesen wird.

9. Zweimassenschwungrad nach Anspruch 7, **dadurch gekennzeichnet, dass** die zweite Nabe (7) zweite Lagermittel (710) trägt, die den Stator (700) der elektrischen Maschine tragen.

10. Zweimassenschwungrad nach Anspruch 9, **dadurch gekennzeichnet, dass** die zweiten Lager am Fuß der Zwischenplatte (701) eingefügt sind.

11. Zweimassenschwungrad nach Anspruch 1, **dadurch gekennzeichnet, dass** die erste Masse (1) einen Trägerflansch (6) umfasst, der mit der ersten Nabe (5, 50) verbunden ist.

12. Zweimassenschwungrad nach Anspruch 11, **dadurch gekennzeichnet, dass** der Halteflansch (6) durch die erste Nabe (5, 50) zentriert wird.

13. Zweimassenschwungrad nach Anspruch 11, **dadurch gekennzeichnet, dass** die erste Nabe (5, 50) und der Trägerflansch (6) von ersten Befestigungsorganen (100, 101 - 10) durchquert werden.

14. Zweimassenschwungrad nach Anspruch 13, **dadurch gekennzeichnet, dass** die ersten Befestigungsorgane (10) die zweite Nabe (7) zur Befestigung an der Antriebswelle durchqueren.

15. Zweimassenschwungrad nach Anspruch 13, **dadurch gekennzeichnet, dass** die ersten Befestigungsorgane (101) in der zweiten Nabe (7) befestigt sind und in Umfangsrichtung mit zweiten Befestigungsorganen (100) abwechseln, die die Nabe (7) an der Antriebswelle befestigen.

16. Zweimassenschwungrad nach Anspruch 11, **dadurch gekennzeichnet, dass** der Trägerflansch (6) durch erste Befestigungsorgane (101) an der zweiten Nabe (7) befestigt wird und dass die zweiten Befestigungsmittel (100) dafür vorgesehen sind, die zweite Nabe (7) an der Antriebswelle zu befestigen.

17. Zweimassenschwungrad nach Anspruch 11, **dadurch gekennzeichnet, dass** eines der Elemente erste Nabe (5, 50) beziehungsweise zweite Nabe (7) innen ein Führungslager (9) für die Halterung des Endes der Abtriebswelle trägt.

18. Zweimassenschwungrad nach Anspruch 11, **dadurch gekennzeichnet, dass** eine Trägerscheibe (32) innen an dem Trägerflansch (6) radial außerhalb der zweiten Nabe (7) und auf der der zweiten Masse (2) entgegengesetzten Seite des Trägerflanschs (6) befestigt ist.

19. Zweimassenschwungrad nach Anspruch 18, **dadurch gekennzeichnet, dass** eine Schließscheibe (620) fest mit der Trägerscheibe (32) verbunden ist und die Schließscheibe (620) zweite Drehzapfen (86) für die gelenkige Montage elastischer Organe (30) trägt, die radial zwischen den zwei Massen (1, 2) vorhanden sind.

20. Zweimassenschwungrad nach Anspruch 19, **dadurch gekennzeichnet, dass** die zweite Masse an ihrer inneren Peripherie erste Drehzapfen (127) für die gelenkige Montage der elastischen Organe (30) trägt.

21. Zweimassenschwungrad nach Anspruch 1, **dadurch gekennzeichnet, dass** die zweite Masse (2) aus zwei koaxialen Teilen besteht, und zwar einer Gegendruckplatte (21), die auf einer Innennabe (220) drehbar angebracht ist, die axial relativ zur Gegendruckplatte (21) in Richtung zur ersten Masse versetzt ist, und dass ein Drehmomentbegrenzer (250) der Reibungsart zwischen der Gegendruckplatte (21) und der Innennabe (220) vorhanden ist.

## Claims

1. Double torsion damping flywheel comprising two coaxial masses (1, 2) mounted so as to be able to move in rotation with respect to each other counter to elastic members (3, 30), in which one of the masses, referred to as the first mass (1), is intended to be fixed to a driving shaft, whilst the other mass, referred to as the second mass (2), comprises a reaction plate (21) for its rotational connection to a driven shaft, and in which the first mass (1) has at the centre a hub (5, 50-7) extending in axial projection and carrying bearing means (4, 40) acting between the second mass (2) and the hub (5, 50-7) for rotational mounting of the second mass (2) on the first mass (1), the hub (5, 50-7) being in two axially aligned coaxial parts, namely a first hub (5, 50) rotationally supporting the second mass (2) by means of bearing means (4, 40) carried by this first hub (5, 50) and a second means (7), **characterised in that** the second hub (7) forms an axial strut for acting between the driving shaft and the first hub (4, 40) for fixing to the driving shaft.

2. Double flywheel according to Claim 1, **characterised in that** the second hub (7) has a cylindrical shape and has at its external periphery a hollow (71) for housing a sealing joint (77) for acting between the second hub (7) and a fixed wall (775, 36).

3. Double flywheel according to Claim 2, **characterised in that** the second hub (7) has at its external periphery a first groove (72) adjacent to the hollow (71).

4. Double flywheel according to Claim 3, **characterised in that** the second hub (7) has a second groove (73) larger in size than the first groove (72).

5. Double flywheel according to Claim 4, **characterised in that** the second groove (73) is delimited laterally by an inclined flank.

6. Double flywheel according to Claim 5, **characterised in that** the inclined flank belongs to a wall (74) extending in radial projection towards the outside at the free end of the second hub (7) opposite to the hollow.

7. Double flywheel according to Claim 1, **characterised in that** the second hub (7) carries the rotor (500) of an electrical machine (600).

8. Double flywheel according to Claim 7, **characterised in that** the rotor (500) is mounted on a sleeve (702) fixed to a damper plate (701) which the second hub (7) has in radial projection.

9. Double flywheel according to Claim 7, **characterised in that** the second hub (7) carries second bearing means (710) carrying the stator (700) of the electrical machine.

10. Double flywheel according to Claim 9, **characterised in that** the second bearings are located at the root of the damper plate (701).

11. Double flywheel according to Claim 1, **characterised in that** the first mass (1) comprises a support plate (6) associated with the first hub (5, 50).

12. Double flywheel according to Claim 11, **characterised in that** the support plate (7) is centred by the first hub (5, 50).

13. Double flywheel according to Claim 11, **characterised in that** the first hub (5, 50) and the support plate (6) have first fixing members (100, 101-10) passing through them.

14. Double flywheel according to Claim 13, **characterised in that** the first fixing members (10) pass through the second hub (7) for fixing to the driving shaft.

15. Double flywheel according to Claim 13, **characterised in that** the first fixing members (101) are fixed in the second hub (7) and alternate circumferentially with second fixing members (100) fixing the second hub (7) to the driving shaft.

16. Double flywheel according to Claim 11, **characterised in that** the support plate (6) is fixed by first fixing members (101) to the second hub (7) and **in that** second fixing means (100) are provided for fixing the second hub (7) to the driving shaft.

17. Double flywheel according to Claim 11, **characterised in that** one of the elements consisting of first hub (5, 50) and second hub (7) carries on the inside a pilot bearing (9) for supporting the end of the driven shaft.

18. Double flywheel according to Claim 11, **characterised in that** a support disc (32) is fixed internally to the support plate (6) radially above the second hub (7) and on the side of the support plate (6) turned in the opposite direction to the second mass (2).

19. Double flywheel according to Claim 18, **characterised in that** a closure washer (620) is fixed to the support disc (32) and the closure washer (620) carries second journals (86) for the mounting with articulation of elastic members (30) acting radially between the two masses (1, 2).

20. Double flywheel according to Claim 19, **characterised in that** the second mass carries at its internal periphery first journals (127) for mounting the said elastic members (30) with articulation.

21. Double flywheel according to Claim 1, **characterised in that** the second mass (2) is in two coaxial parts, namely a reaction plate (21) rotationally mounted on an internal hub (220) offset axially with respect to the reaction plate (21) in the direction of the first mass and **in that** a torque limiter (250) of the friction type acts between the reaction plate (21) and the internal hub (220).
